# EUROPEAN PATENT APPLICATION

(11) **EP 4 187 901 A1**
(43) Date of publication of application: **31.05.2023**
(21) Application number: 21857651.0
(22) Date of filing: 17.08.2021
(51) Int. Cl.: H04N 9/04

(54) **IMAGE SENSOR, SIGNAL PROCESSING METHOD, AND RELATED DEVICE**

(30) Priority: 19.08.2020 CN 202010837060
(71) Applicant: Huawei Technologies Co., Ltd., Shenzhen, Guangdong 518129 (CN)
(72) Inventor: YANG, Hui, Shenzhen, Guangdong 518129 (CN); XU, Haisong, Hangzhou, Zhejiang 310027 (CN); LU, Yang, Hangzhou, Zhejiang 310027 (CN); YE, Zhengnan, Hangzhou, Zhejiang 310027 (CN)
(74) Representative: Goddar, Heinz J.
(86) International application number: PCT/CN2021/112908
(87) International publication number: WO 2022/037557

(57) **Abstract**

An image sensor, a signal processing method, and a device are provided. The method may be applied to the image processing field. The image sensor includes at least one hyper spectral or multispectral optical filter array, m optical filters are configured to obtain optical signals (2101) of a target object in at least two different spectral bands; convert the optical signals obtained by using the m optical filters into electrical signals (2102); combine the electrical signals corresponding to the m optical filters to obtain a combined electrical signal (2103). The combined electrical signal is used to generate an image (2104) of the target object. Combining the electrical signals obtained by the hyper spectral or multispectral optical filter array in at least two different spectral bands can map N multispectral or hyper spectral bands to H spectral channels, where H is less than N. In this way, the hyper spectral or multispectral optical filter array is compatible with a low spectral imaging technology.

## Description

This application claims priority to Chinese Patent Application No. 202010837060.4, filed with the China National Intellectual Property Administration on August 19, 2020, and entitled "IMAGE SENSOR, SIGNAL PROCESSING METHOD, AND RELATED DEVICE", which is incorporated herein by reference in its entirety.

### TECHNICAL FIELD

This application relates to the field of image processing technologies, and in particular, to an image sensor, a signal processing method, and a related device.

### BACKGROUND

A red-green-blue (red green blue, RGB) imaging technology collects red spectral information, green spectral information, and blue spectral information of a target object in a visible light spectral band, to generate an image of the target object.

A hyper spectral imaging technology or a multispectral imaging technology collects optical signals of a target object in more spectral bands, has higher spectral resolution and a wider spectral range, and collects more abundant image information.

However, three primary colors a human eye can see are red, green, and blue. To present an image that can be readily seen by the human eye, after spectral information of the target object is collected by using a hyper spectral or multispectral optical filter array, an RGB image needs to be finally output. Therefore, a technical solution that uses the hyper spectral or multispectral optical filter array to capture optical signals of a target object and that is compatible with RGB imaging is urgently needed.

### SUMMARY

Embodiments of this application provide an image sensor, a signal processing method, and a device, to combine electrical signals obtained by using a hyper spectral or multispectral optical filter array in at least two different spectral bands, and map N multispectral or hyper spectral bands to H spectral channels, where H is less than N. In this way, the hyper spectral or multispectral optical filter array is compatible with a low spectral imaging technology.

To resolve the foregoing technical problem, embodiments of this application provide the following technical solutions.

According to a first aspect, an embodiment of this application provides an image sensor, which may be applied to the image processing field. The image sensor includes at least one optical filter array. The optical filter array is a hyper spectral or multispectral optical filter array. The optical filter array includes m optical filters and an optical-to-electrical conversion module. The optical-to-electrical conversion module includes an optical-to-electrical conversion unit and a combining unit. The optical-to-electrical conversion unit may be represented as an optical-to-electrical conversion circuit. The combining unit may be represented as a combining circuit. The m optical filters are configured to obtain optical signals of a target object in at least two different spectral bands. The at least two different spectral bands may be spectral bands within a same spectral channel range. For example, the at least two different spectral bands include two different spectral bands R1 and R2. Both the two spectral bands R1 and R2 are located within a spectral band range of a spectral channel R in an RGB channel. The optical-to-electrical conversion unit is configured to convert the optical signals obtained by the m optical filters into electrical signals. The combining unit is configured to combine the electrical signals corresponding to the m optical filters to obtain a combined electrical signal. A combination manner may be obtaining a maximum value, obtaining an average value, or superposition. The optical-to-electrical conversion module is configured to output the combined electrical signal. The combined electrical signal is used to generate an image of the target object.

In this implementation, an optical filter array used in a hyper spectral imaging technology or a multispectral imaging technology can obtain optical signals of a target object in a plurality of spectral bands. When a non-hyper spectral image or a non-multispectral image needs to be output, electrical signals corresponding to at least two different spectral bands may be combined to obtain a combined electrical signal. To be specific, N multispectral or hyper spectral bands may be mapped to H spectral channels, where H is less than N. In this way, the hyper spectral or multispectral optical filter array is compatible with a low spectral imaging technology. When an RGB image needs to be output, a value of H is 3. The three spectral channels respectively correspond to three types of electrical signals required for generating the RGB image. The foregoing manner can be implement compatibility with an RGB imaging technology when spectral information of a target object is collected by a hyper spectral or multispectral optical filter array.

In a possible implementation of the first aspect, the combining unit is specifically configured to superpose the electrical signals corresponding to the m optical filters to obtain the combined electrical signal. In this implementation, the electrical signals corresponding to the m optical filters are combined by superposing an electrical signal corresponding to each optical filter. This solution is simple and easy to implement.

In a possible implementation of the first aspect, the optical filter array includes M optical filters. The M optical filters are divided into K groups. Any group of optical filters in the K groups is configured to obtain an optical signal of the target object in at least one spectral band. It should be noted that it is not possible that each group in the K groups is configured to obtain only an optical signal of the target object in one spectral band. In other words, at least one group in the K groups is configured to obtain optical signals of the target object in at least two spectral bands. One group in the K groups includes the m optical filters, where K is an integer greater than 1. There is a mapping relationship between the K groups of optical filters and H spectral channels. The H spectral channels are divided based on any one of an RGB channel, an RGGB channel, an RYB channel, an RYYB channel, an RWWB channel, or an RBGIR channel. For example, optical signals in N spectral bands are divided based on the RGB channel. The N spectral bands may include six different spectral bands: R1, R2, G1, G2, G3, G4, B1, and B2. Optical signals of the target object in the two spectral bands R1 and R2 are mapped to an R channel in the RGB channel. Optical signals of the target object in the four spectral bands G1, G2, G3, and G4 are mapped to a G channel in the RGB channel. Optical signals of the target object in the two spectral bands B1 and B2 are mapped to a B channel in the RGB channel.

In this implementation, a plurality of division manners of the H spectral channels corresponding to the K groups of optical filters are listed, to improve implementation flexibility of this solution and expand application scenarios of this solution.

In a possible implementation of the first aspect, there is a mapping relationship between the m optical filters and a first spectral channel in the H spectral channels. The first spectral channel is one spectral channel in the H spectral channels. The first spectral channel corresponds to a first spectral band. The at least two different spectral bands corresponding to the m optical filters are located within a range of the first spectral band. For example, the at least two different spectral bands corresponding to the m optical filters are respectively two different spectral bands G1 and G2. The first spectral channel is a G channel in the RGGB channel. The two different spectral bands G1 and G2 are both located within a spectral range of the G channel. Alternatively, a spectral band that is in the at least two different spectral bands corresponding to the m optical filters and that has a proportion greater than or equal to a preset proportion is located within a range of the first spectral band. A value of the preset proportion may be 98 percent, 95 percent, or 90 percent. For example, the at least two different spectral bands corresponding to the m optical filters are respectively two different spectral bands B 1 and B2. The first spectral channel is a B channel in the RBBB channel, and more than 90 percent of spectral bands in the two different spectral bands B1 and B2 are located within a spectral range of the B channel.

In this implementation, the at least two different spectral bands corresponding to the m optical filters are located within the range of the first spectral band. Alternatively, the spectral band that is in the at least two different spectral bands corresponding to the m optical filters and that has the proportion greater than or equal to the preset proportion is located within the range of the first spectral band. In other words, a hyper spectral band or a multispectral spectral band is highly similar to mapped H spectral bands. This improves quality of a finally obtained image.

In a possible implementation of the first aspect, a group of optical filters including the m optical filters is in a rectangular shape. Further, any group of optical filters in the K groups is in a rectangular shape. In this implementation, in an RGB channel, RGGB channel, RYB channel, RYYB channel, RWWB channel, RBGIR channel, or another technology, each group of optical filters is in a rectangular shape. Any group of optical filters in the K groups is also configured as a rectangular shape. This reduces difficulty in a mapping process.

In a possible implementation of the first aspect, the m optical filters are adjacent optical filters. Further, any group of optical filters in the K groups includes at least one optical filter. The at least one optical filter includes an adjacent optical filter. In this implementation, an optical signal obtained by one group is mapped to an optical signal of one channel. In an RGB, RYB, RWWB, RBGIR, or another imaging technology, at least one optical filter corresponding to the channel includes the adjacent optical filter. In other words, similarity to an RGB, RYB, RWWB, RBGIR, or another imaging technology is increased in terms of optical filter location allocation, to reduce difficulty in a subsequent signal processing process.

In a possible implementation of the first aspect, optical filters included in different groups in the K groups of optical filters are completely different. In other words, no overlapping optical filter exists in optical filters included in different groups in the K groups of optical filters. In this implementation, because no overlapping optical filter exists in the optical filters included in different groups in the K groups of optical filters, information obtained by each optical filter is not reused, and there is no information redundancy. This saves computer resources.

In a possible implementation of the first aspect, optical filters included in different groups in the K groups of optical filters are partially but not completely the same. In other words, at least one overlapping optical filter exists between different groups. In this implementation, because a same optical filter exists in different groups in the K groups of optical filters, a spatial structure is more compact, to reduce difficulty in a subsequent signal processing process.

In a possible implementation of the first aspect, any group of optical filters in the K groups is configured to obtain an optical signal of the target object in at least one spectral band. Quantities of spectral bands corresponding to different groups may be the same or different. In this implementation, flexibility in a process of dividing the M optical filters is enhanced.

In a possible implementation of the first aspect, the M optical filters are configured to obtain optical signals of the target object in 12 different sub-spectral bands. The K groups of optical filters are configured to map the sub-spectral bands to three spectral channels. Each group of optical filters in the K groups is configured to obtain spectral information of the target object in four different sub-spectral bands. To be specific, each of the three spectral channels corresponds to four different sub-spectral bands. The four different sub-spectral bands are all located within a spectral band range of the spectral channel corresponding to the four different sub-spectral bands. For example, the 12 different sub-spectral bands are respectively R1, R2, R3, R4, G1, G2, G3, G4, B1, B2, B3, and B4. The 3 spectral channels are respectively an R channel, a G channel, and a B channel. The four different spectral bands R1, R2, R3, and R4 are all located within a spectral band corresponding to the R channel. The four different spectral bands G1, G2, G3, and G4 are all located within a spectral band corresponding to the G channel. The four different spectral bands B1, B2, B3, and B4 are all located within a spectral band corresponding to the B channel. Alternatively, the M optical filters are configured to obtain optical signals of the target object in six different sub-spectral bands. The K groups of optical filters are configured to map the sub-spectral bands to three spectral channels. Each group of optical filters in the K groups is configured to obtain spectral information of the target object in two different sub-spectral bands. To be specific, each of the three spectral channels corresponds to two different sub-spectral bands. The two different sub-spectral bands are both located within a spectral band range of the spectral channel corresponding to the two different sub-spectral bands. Alternatively, the M optical filters are configured to obtain optical signals of the target object in six different sub-spectral bands. The K groups of optical filters are configured to map to three spectral channels. The K groups include a second group and a third group. Optical filters in the second group are configured to obtain spectral information of the target object in four spectral bands. The four different sub-spectral bands are all located within a spectral band range of a spectral channel corresponding to the four different sub-spectral bands. Optical filters in the third group are configured to obtain spectral information of the target object in two spectral bands. The two different sub-spectral bands are both located within a spectral band range of a spectral channel corresponding to the two different sub-spectral bands. The second group and the third group are two different groups in the K groups.

In this implementation, allocation of spectral bands corresponding to different groups is provided, to improve implementation flexibility of this solution. In addition, a larger quantity of spectral bands corresponding to a same group indicates more abundant spectral information obtained by the group, and more computer resources are required in a subsequent processing process. In the H channels corresponding to the K groups, different channels may be of different significance. Therefore, a larger quantity of sub-spectral bands are allocated to a group corresponding to a channel of greater significance. A smaller quantity of sub-spectral bands are allocated to a group corresponding to a channel of less significance. This improves abundance of obtained spectral information while saving computer resources.

In a possible implementation of the first aspect, different groups in the K groups of optical filters include completely different optical filters. A value of M is 16, and a value of K is 4. Each group of optical filters in the K groups includes four optical filters. A value of His 3 or 4. To be specific, the K groups of optical filters are mapped to three spectral channels or four spectral channels. In this implementation, a plurality of specific implementations of the optical filter array are provided, to improve implementation flexibility of this solution, and expand application scenarios of this solution. In addition, in the foregoing implementations, optical filters included in different groups are completely different. This avoids processing of easy information and a waste of computer resources.

In a possible implementation of the first aspect, optical filters included in different groups in the K groups of optical filters are partially but not completely the same. A value of M is 9, a value of N is 6, and a value of K is 4. Each group of optical filters in the K groups is configured to obtain spectral information of the target object in four spectral bands. Each group of optical filters in the K groups includes four optical filters, and one group of optical filters in the K groups is in a rectangular shape. A value of H is 3 or 4. To be specific, the K groups of optical filters are mapped to three spectral channels or four spectral channels. In this implementation, a specific implementation of the optical filter array is further provided, to further improve implementation flexibility of this solution. In addition, the optical filters included in different groups in the K groups of optical filters are partially but not completely the same, to reduce difficulty in a subsequent signal processing process.

In a possible implementation of the first aspect, the M optical filters are configured to obtain optical signals of the target object in the N sub-spectral bands. Optical filters included in different groups in the K groups of optical filters are partially but not completely the same. A value of M is 9, a value of N is 9, and a value of K is 4. Each group of optical filters in the K groups includes four optical filters. Each group of optical filters in the K groups is configured to obtain spectral information of the target object in three spectral bands. One group of optical filters in the K groups is in an L shape, an inverted L shape, or a reverse L shape. Alternatively, optical filters included in different groups in the K groups of optical filters are completely different. A value of M is 8, a value of N is 6, and a value of K is 4. Each group of optical filters in the K groups includes two optical filters. Each group of optical filters in the K groups is configured to obtain spectral information of the target object in two spectral bands. A value of His 3 or 4. To be specific, the K groups of optical filters are mapped to three spectral channels or four spectral channels. In this implementation, two specific implementations of the optical filter array are further provided, to further improve implementation flexibility of this solution.

In a possible implementation of the first aspect, when the H channels do not include W channels (namely, white channels), the optical filter array may further include a fully transparent light transmissive sheet. The fully transparent light transmissive sheet is located in a central area of the optical filter array. A value of M is 8, and a value of K is 4. Each group of optical filters in the K groups includes two optical filters. The fully transparent light transmissive sheet is located at a central location of eight optical filters. Further, a value of N is 6.

In this implementation, contour information of the target object may be obtained by the fully transparent light transmissive sheet, to provide assistance for mosaic processing in a subsequent signal processing process. In addition, optical signals captured by the fully transparent light transmissive sheet may be used as an auxiliary sensor of a light source spectrum, to provide assistance for white balance processing in a subsequent signal processing process.

According to a second aspect, an embodiment of this application provides an electronic device, which may be applied to the image processing field. The electronic device includes at least one optical filter array and a processor. The optical filter array is a hyper spectral or multispectral optical filter array. The optical filter array includes m optical filters and an optical-to-electrical conversion unit. The m optical filters are configured to obtain optical signals of a target object in at least two different spectral bands. The optical-to-electrical conversion unit is configured to convert the optical signals obtained by the m optical filters into electrical signals. The processor is configured to combine the electrical signals corresponding to the m optical filters to obtain a combined electrical signal, and generate an image of the target object based on the combined electrical signal. A difference between the optical filter array in the second aspect and the optical filter array in the first aspect lies in that the optical filter array in the second aspect does not have a combining unit.

In this implementation, the combining unit is not disposed in the optical filter array. The processor combines electrical signals corresponding to all optical filters in a group in a data processing process. This provides another implementation solution that is compatible with an RGB imaging technology when spectral information of the target object is collected by the hyper spectral or multispectral optical filter array, to improve implementation flexibility of this solution. In addition, in this implementation solution, no hardware change is required, thereby reducing costs.

In a possible implementation of the second aspect, the electronic device further includes an analog-to-digital conversion unit. The analog-to-digital conversion unit is configured to convert an analog electrical signal generated by the optical-to-electrical conversion unit into a digital electrical signal. The processor is specifically configured to superpose digital electrical signals corresponding to all optical filters in a first group to obtain a combined digital electrical signal, that is, add the digital electrical signals corresponding to all the optical filters in the first group to obtain the combined digital electrical signal. The processor performs the foregoing operations on each group of optical filters in K groups, to obtain K combined digital electrical signals. One digital electrical signal may be specifically represented as a value. A value range of the digital electrical signal is related to a bit width of analog-to-digital conversion.

In a possible implementation of the second aspect, the electronic device is any one of the following devices: an image sensor, a camera, a mobile terminal, an intelligent vehicle, and a surveillance device.

In a possible implementation of the second aspect, there is a mapping relationship between the K groups of optical filters and H spectral bands, where H is a positive integer less than or equal to K. H spectral channels are any one of an RGB channel, an RGGB channel, an RYB channel, an RYYB channel, anRWWB channel, or an RBGIR channel. R is a red channel, G is a green channel, B is a blue channel, Y is a yellow channel, W is a white channel, and IR is a near-infrared channel.

In a possible implementation of the second aspect, there is a mapping relationship between the K groups of optical filters and H spectral channels. H spectral bands corresponding to the H spectral channels are included in a first spectral band. N spectral bands are located within a range of the first spectral band. Alternatively, a spectral band that is in the N spectral bands and that has a proportion greater than or equal to a preset proportion is located within a range of the first spectral band.

In a possible implementation of the second aspect, any group of optical filters in the K groups is in a rectangular shape.

In a possible implementation of the second aspect, any group of optical filters in the K groups includes adjacent optical filters.

In a possible implementation of the second aspect, optical filters included in different groups in the K groups of optical filters are completely different.

For term concepts and specific implementation steps in the second aspect and some possible implementations of the second aspect of embodiments of this application and beneficial effect brought by each possible implementation, refer to descriptions in the possible implementations of the first aspect. Details are not described herein again.

According to a third aspect, an embodiment of this application provides an image sensor, which may be applied to the image processing field. The image sensor includes at least one optical filter array, and the optical filter array is the optical filter array in the first aspect. The optical filter array is a hyper spectral or multispectral optical filter array. The optical filter array includes m optical filters and an optical-to-electrical conversion module. The m optical filters are configured to obtain optical signals of a target object in at least two different spectral bands. The optical-to-electrical conversion module is configured to: when the image sensor is in an image shooting mode, convert the optical signals obtained by the m optical filters into electrical signals, combine the electrical signals corresponding to the m optical filters to obtain a combined electrical signal, and output the combined electrical signal. The combined electrical signal is used to generate an image of the target object. The optical-to-electrical conversion module is configured to: when the image sensor is in a non-image shooting mode, convert the optical signals obtained by the m optical filters into electrical signals, and output the electrical signals corresponding to the m optical filters, to generate a hyper spectral image of the target object or a multispectral image of the target object. Further, if no processor is configured in the image sensor, an electronic device in which the image sensor is located may determine whether the electronic device starts the image sensor based on the image shooting mode. When determining that the electronic device is in the image shooting mode, that is, the image sensor works in the image shooting mode, the electronic device controls a combining unit to be enabled, that is, controls the combining unit to work. In this way, the combining unit may combine the electrical signals corresponding to the m optical filters. When determining that the electronic device is in the non-image shooting mode, that is, the image sensor works in the non-image shooting mode, the electronic device controls the combining unit to be disabled, that is, controls the combining unit not to work. In this way, the optical-to-electrical conversion module in the image sensor directly outputs the electrical signals corresponding to the m optical filters. If a processor is configured in the image sensor, when the electronic device determines that the electronic device is in the image shooting mode, the electronic device sends a first instruction to the image sensor. In response to the first instruction, the image sensor controls the combining unit to be enabled, that is, controls the combining unit to work. In this way, the combining unit may combine the electrical signals corresponding to the m optical filters. When the electronic device determines that the electronic device is in the non-image shooting mode, the electronic device sends a second instruction to the image sensor. In response to the second instruction, the image sensor controls the combining unit to be disabled, that is, controls the combining unit not to work. In this way, the optical-to-electrical conversion module in the image sensor directly outputs the electrical signals corresponding to the m optical filters.

In this implementation, an RGB imaging technology is compatible when spectral information of the target object is collected by the hyper spectral or multispectral optical filter array, and can directly output electrical signals generated by the optical-to-electrical conversion unit after the optical-to-electrical conversion unit converts optical signals in N spectral bands into the electrical signals. In other words, the output electrical signals may carry hyper spectral or multispectral information, thereby expanding application scenarios of this solution.

In a possible implementation of the third aspect, the non-image shooting mode is any one of the following modes: an object recognition mode, a light source estimation mode, and a depth detection mode.

The image sensor in the third aspect may further perform steps performed by the image sensor in the first aspect. For term concepts and specific implementation steps in the third aspect and the possible implementations of the third aspect of embodiments of this application and beneficial effect brought by each possible implementation, refer to descriptions in the possible implementations of the first aspect. Details are not described herein again.

According to a fourth aspect, an embodiment of this application provides an electronic device. The electronic device includes an image sensor and a processor. The image sensor includes at least one optical filter array, and the optical filter array is the optical filter array in the second aspect. The optical filter array is a hyper spectral or multispectral optical filter array. The optical filter array includes m optical filters and an optical-to-electrical conversion unit. The m optical filters are configured to obtain optical signals of a target object in at least two different spectral bands. The optical-to-electrical conversion unit is configured to convert the optical signals obtained by the m optical filters into electrical signals. The processor is configured to: when the electronic device is in an image shooting mode, combine the electrical signals corresponding to the m optical filters to obtain a combined electrical signal, and generate an image of the target object based on the combined electrical signal. The processor is configured to: when the electronic device is in a non-image shooting mode, no longer combine the electrical signals corresponding to the m optical filters, and generate a hyper spectral image or a multispectral image of the target object based on the electrical signals corresponding to the m optical filters. Further, an electronic device in which the image sensor is located may determine whether the electronic device starts the image sensor based on the image shooting mode. When determining that the electronic device is in the image shooting mode, that is, the image sensor works in the image shooting mode, the electronic device controls a combining unit to be enabled, that is, controls the combining unit to work. In this way, the combining unit may combine the electrical signals corresponding to the m optical filters. When determining that the electronic device is in the non-image shooting mode, that is, the image sensor works in the non-image shooting mode, the electronic device controls the combining unit to be disabled, that is, controls the combining unit not to work. In this way, the optical-to-electrical conversion module in the image sensor directly outputs the electrical signals corresponding to the m optical filters.

In a possible implementation of the fourth aspect, the non-image shooting mode is any one of the following modes: an object recognition mode, a light source estimation mode, and a depth detection mode.

The image sensor in the fourth aspect may further perform steps performed by the image sensor in the second aspect. For term concepts and specific implementation steps in the fourth aspect and the possible implementations of the fourth aspect of embodiments of this application and beneficial effect brought by each possible implementation, refer to the descriptions in the possible implementations of the second aspect. Details are not described herein again.

According to a fifth aspect, an embodiment of this application provides an electronic device, which may be applied to the image processing field. The electronic device includes an image sensor and a processor. The image sensor includes at least one optical filter array. The image sensor includes at least one optical filter array. The image sensor is the image sensor in the first aspect. The processor is configured to generate an image of a target object based on an electrical signal output by each optical filter array.

According to a sixth aspect, an embodiment of this application provides a signal processing method. The method is applied to an electronic device. The electronic device includes at least one optical filter array. The optical filter array is a hyper spectral or multispectral optical filter array. The optical filter array includes m optical filters. The method includes: obtaining, by using the m optical filters, optical signals of a target object in at least two different spectral bands; converting the optical signals obtained by the m optical filters into electrical signals; and combining the electrical signals corresponding to the m optical filters to obtain a combined electrical signal, and generating an image of the target object based on the combined electrical signal.

In a possible implementation of the sixth aspect, that the processor combines the electrical signals corresponding to the m optical filters includes: superposing the electrical signals corresponding to the m optical filters, to obtain the combined electrical signal.

For term concepts and specific implementation steps in the possible implementations of the sixth aspect of embodiments of this application and beneficial effect brought by each possible implementation, refer to descriptions in the possible implementations of the first and second aspects. Details are not described herein again.

According to a seventh aspect, an embodiment of this application provides a signal processing method. The method is applied to an electronic device. The electronic device includes at least one optical filter array. The optical filter array is a hyper spectral or multispectral optical filter array. The optical filter array includes m optical filters. The method includes: obtaining, by using the m optical filters, optical signals of a target object in at least two different spectral bands; converting the optical signals obtained by the m optical filters into electrical signals; when the electronic device is in an image shooting mode, combining the electrical signals corresponding to the m optical filters to obtain a combined electrical signal, and generating an image of the target object based on the combined electrical signal; and when the electronic device is in a non-image shooting mode, generating a hyper spectral image or a multispectral image of the target object based on the electrical signals corresponding to the m optical filters.

In a possible implementation of the seventh aspect, the non-image shooting mode is any one of the following modes: an object recognition mode, a light source estimation mode, and a depth detection mode.

For term concepts and specific implementation steps in the possible implementations of the seventh aspect of embodiments of this application and beneficial effect brought by each possible implementation, refer to descriptions in the possible implementations of the first and second aspects. Details are not described herein again.

According to an eighth aspect, an embodiment of this application provides a computer program. When the computer program is run on a computer, the computer is enabled to perform the signal processing method according to the sixth aspect or the seventh aspect.

According to a ninth aspect, an embodiment of this application provides a computer-readable storage medium. The computer-readable storage medium stores a computer program. When the computer program is run on a computer, the computer is enabled to perform the signal processing method according to the sixth aspect or the seventh aspect.

According to a tenth aspect, an embodiment of this application provides a circuit system. The circuit system includes a processing circuit. The processing circuit is configured to perform the signal processing method according to the sixth aspect or the seventh aspect.

According to an eleventh aspect, an embodiment of this application provides a chip system. The chip system includes a processor, configured to implement functions in the foregoing aspects, for example, sending or processing of data and/or information in the foregoing methods. In a possible design, the chip system further includes a memory. The memory is configured to store program instructions and data that are necessary for a server or a communication device. The chip system may include a chip, or may include a chip and another discrete component.

### BRIEF DESCRIPTION OF DRAWINGS

FIG. 1 is a schematic diagram of a structure of an optical filter array according to an embodiment of this application;
FIG. 2 is a schematic diagram of three structures of an optical filter in an optical filter array according to an embodiment of this application;
FIG. 3 is a schematic diagram of two correspondences between an optical filter in an optical filter array and an optical-to-electrical conversion unit according to an embodiment of this application;
FIG. 4 is a schematic diagram of a correspondence between N spectral bands in an optical filter array and spectral bands of H spectral channels according to an embodiment of this application;
FIG. 5 is a schematic diagram of another correspondence between N spectral bands in an optical filter array and spectral bands of H spectral channels according to an embodiment of this application;
FIG. 6 is a schematic diagram of still another correspondence between N spectral bands in an optical filter array and spectral bands of H spectral channels according to an embodiment of this application;
FIG. 7 is a schematic diagram of yet another correspondence between N spectral bands in an optical filter array and spectral bands of H spectral channels according to an embodiment of this application;
FIG. 8 is a schematic diagram of three location relationships between a plurality of optical filters in a group of optical filters in an optical filter array according to an embodiment of this application;
FIG. 9 is a schematic diagram of a location relationship between optical filters included in different groups in an optical filter array according to an embodiment of this application;
FIG. 10 is another schematic diagram of a location relationship between optical filters included in different groups in an optical filter array according to an embodiment of this application;
FIG. 11 is still another schematic diagram of a location relationship between optical filters included in different groups in an optical filter array according to an embodiment of this application;
FIG. 12 is yet another schematic diagram of a location relationship between optical filters included in different groups in an optical filter array according to an embodiment of this application;
FIG. 13 is a schematic diagram of a grouping manner of an optical filter array according to an embodiment of this application;
FIG. 14 is a schematic diagram of another grouping manner of an optical filter array according to an embodiment of this application;
FIG. 15 is a schematic diagram of still another grouping manner of an optical filter array according to an embodiment of this application;
FIG. 16 is a schematic diagram of yet another grouping manner of an optical filter array according to an embodiment of this application;
FIG. 17 is a schematic diagram of a structure of an electronic device according to an embodiment of this application;
FIG. 18 is a schematic diagram of another structure of an electronic device according to an embodiment of this application;
FIG. 19 is a schematic diagram of a structure of an image sensor according to an embodiment of this application;
FIG. 20 is a schematic diagram of still another structure of an electronic device according to an embodiment of this application; and
FIG. 21 is a schematic flowchart of a signal processing method according to an embodiment of this application.

### DESCRIPTION OF EMBODIMENTS

Embodiments of this application provide an image sensor, a signal processing method, and a device, to combine electrical signals obtained by using a hyper spectral or multispectral optical filter array in at least two different spectral bands, and map N multispectral or hyper spectral bands to H spectral channels, where H is less than N. In this way, the hyper spectral or multispectral optical filter array is compatible with a low spectral imaging technology.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a distinguishing manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In the description of this application, "a plurality of" means two or more than two, unless otherwise specifically limited.

In this application, unless otherwise specified and limited, the terms such as "mount", "link", "connect", "fasten", and "dispose" should be understood broadly, for example, may be a fixed connection, may be a detachable connection, or may be integration; may be a mechanical connection or may be an electrical connection; or may be a direct connection, may be an indirect connection implemented by using an intermediate medium, or may be communication inside two elements or an interaction relationship between two elements. A person of ordinary skill in the art may interpret specific meanings of the foregoing terms in this application according to specific cases.

In descriptions of this application, it should be understood that a direction or a position relationship indicated by terms such as "length", "width", "upper", "lower", "front", "back", "left", "right", "vertical", "horizontal", "top", "bottom", "inside", or "outside" is a direction or a position relationship shown based on the accompanying drawings, is merely used to facilitate descriptions of this application and simplify the descriptions, but is not intended to indicate or imply that an indicated apparatus or element needs to have a particular direction, and needs to be constructed and operated in a particular direction, and therefore cannot be construed as a limitation on this application.

Some terms are used in the specification and claims to refer to specific components. A person skilled in the art can understand that a same component may be named differently by hardware manufacturers. In the specification and subsequent claims, components are distinguished between each other based on functional differences, instead of naming differences. The terms "including" and "comprising" mentioned in the specification and the claims are open class terms and should be construed as including but not limited to.

The following describes embodiments of this application with reference to the accompanying drawings. A person of ordinary skill in the art may learn that as a technology evolves and a new scenario emerges, technical solutions provided in embodiments of this application are also applicable to a similar technical problem.

Embodiments of this application may be applied to various application scenarios in which image capture needs to be performed. For example, in smartphones, a mobile phone may be used to shoot an image of a target object, or may be used to perform object recognition on the target object. When the mobile phone is used to perform object recognition, more abundant information about the target object needs to be collected. In this case, an image sensing module of the mobile phone is configured with a hyper spectral or multispectral optical filter array. When the mobile phone is used to shoot an image of the target object, the mobile phone does not need to obtain spectral information of the target object in too many spectral bands. In other words, the mobile phone only needs to generate an RGB image of the target object. For another example, an intelligent vehicle may be used to shoot an image of a surrounding object, or may be used to extract an intrinsic reflectivity of the surrounding object based on multispectral information to perform accurate object recognition. More abundant spectral information of the surrounding object needs to be collected. In this case, a hyper spectral or multispectral optical filter array is configured in an image sensing module of the intelligent vehicle. When the intelligent vehicle is used to shoot an image of the surrounding object, the intelligent vehicle does not need to obtain the spectrum information of the target object in too many spectral bands. In other words, the intelligent vehicle only needs to generate an RGB image of the surrounding object. In the foregoing two application scenarios, an optical signal of the target object needs to be obtained by a hyper spectral or multispectral optical filter array, and the RGB imaging technology needs to be compatible. It should be understood that application scenarios in embodiments of this application are not exhaustive herein, and the foregoing RGB image is merely an example.

To resolve the foregoing problem, an embodiment of this application provides an image sensor. The image sensor includes at least one optical filter array. The optical filter array is a hyper spectral or multispectral optical filter array. In other words, the optical filter array can obtain optical signals of the target object in N first spectral bands, where N is an integer greater than 3. The optical filter array includes m optical filters and at least one optical-to-electrical conversion unit. The m optical filters can obtain optical signals of the target object in at least two different spectral bands. The optical-to-electrical conversion unit can convert the optical signals obtained by the optical filters into electrical signals. When hyper spectral or multispectral information of the target object does not need to be obtained, the electrical signals corresponding to the m optical filters are combined to obtain a combined electrical signal. The electrical signals in the at least two different spectral bands in the hyper spectral or multispectral optical filter array are combined, to implement mapping between the optical signals in the N first spectral bands and the H spectral channels, where a value of H is less than N. A value of H may be set based on a type of an image that needs to be output. If an RGB image is output, H may be 3. Three spectral channels are respectively configured to obtain an optical signal of a red channel, an optical signal of a green channel, and an optical signal of a blue channel in an RGB channel. It should be understood that the RGB image is used as an example herein only for ease of understanding, and is not intended to limit the solution.

After obtaining the combined electrical signal, an electronic device configured with the image sensor further needs to perform illumination estimation, demosaicing, and noise reduction on the combined signal, to obtain an image in a raw format, perform white balance processing, and obtain an image of the target object. The following first describes a structure of hardware such as an optical filter array, an image sensing module, and an electronic device, and then describes a process of generating an image of a target object after an electrical signal is obtained.

Further, one image sensor may include one or more optical filter arrays. A combining unit may be disposed in the optical filter array to combine electrical signals corresponding to a group of optical filters. Alternatively, combination may be performed after a processor obtains an electrical signal corresponding to each optical filter. The foregoing two cases are different. The following separately describes the foregoing two cases.
1. The combining unit is disposed in the optical filter array to combine the electrical signals corresponding to a group of optical filters.

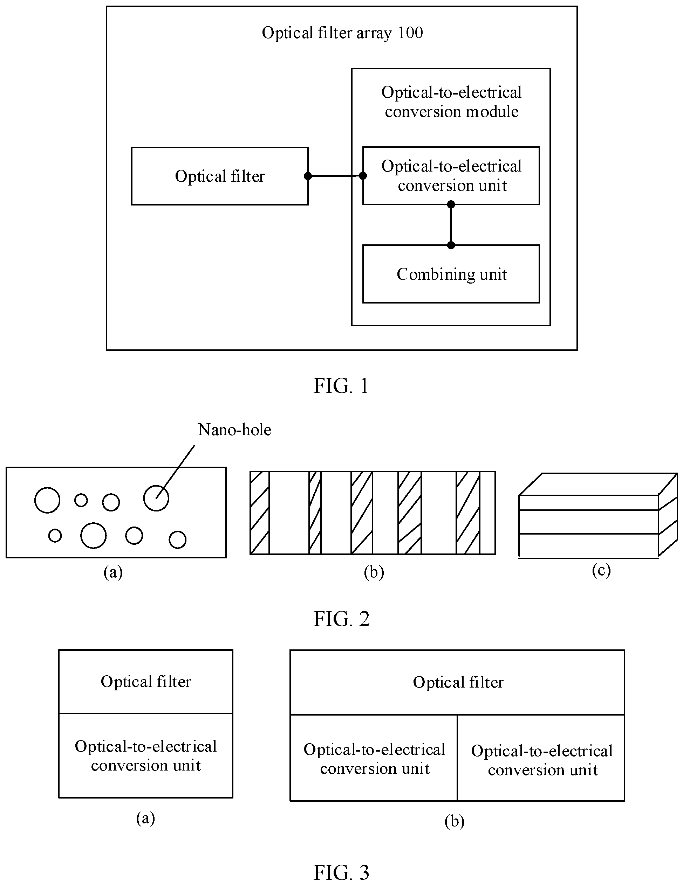

FIG. 1 is a schematic diagram of a structure of an optical filter array according to an embodiment of this application. The optical filter array 100 is a hyper spectral optical filter array, or the optical filter array 100 is a multispectral optical filter array. One optical filter array 100 includes M optical filters and an optical-to-electrical conversion module. The optical-to-electrical conversion module includes at least one optical-to-electrical conversion unit and at least one combining unit. The M optical filters are configured to obtain optical signals of a target object in N different spectral bands, where N is an integer greater than 3. The optical-to-electrical conversion unit is configured to convert the optical signals obtained by the M optical filters into electrical signals.

In a first case, the M optical filters are divided into K groups. Any group of optical filters in the K groups is configured to obtain an optical signal of the target object in at least one spectral band. It should be noted that it is not possible that each group in the K groups is configured to obtain only an optical signal of the target object in one spectral band. In other words, at least one group in the K groups is configured to obtain optical signals of the target object in at least two spectral bands. One group in the K groups includes m optical filters. The m optical filters are configured to obtain optical signals of the target object in at least two spectral bands. The combining unit is configured to combine electrical signals corresponding to the m optical filters, to obtain a combined electrical signal. Alternatively, pixel combination may be performed on pixel units corresponding to the m optical filters, to obtain a combined electrical signal.

In the first case, no hyper spectral or multispectral optical signal is required. In the foregoing case, the combining unit is presented in an enabled state. For example, when a mobile phone invokes a "camera" function to perform photographing, that is, when an image sensor is in an image shooting mode, no hyper spectral or multispectral optical signal is required. It should be understood that this example is merely for ease of understanding this solution.

In this embodiment of this application, an optical filter array 100 used in a hyper spectral imaging technology or a multispectral imaging technology can obtain optical signals of a target object in a plurality of spectral bands. When a non-hyper spectral image or a non-multispectral image needs to be output, electrical signals corresponding to at least two different spectral bands may be combined to obtain a combined electrical signal. To be specific, N multispectral or hyper spectral bands may be mapped to H spectral channels, where H is less than N. In this way, the hyper spectral or multispectral optical filter array is compatible with a low spectral imaging technology. When an RGB image needs to be output, a value of H is 3. The three spectral channels respectively correspond to three types of electrical signals required for generating the RGB image. The foregoing manner can be implement compatibility with an RGB imaging technology when spectral information of a target object is collected by a hyper spectral or multispectral optical filter array.

Optionally, in a second case, the combining unit is in a disabled state. The optical-to-electrical conversion module is configured to output electrical signals that are generated by the optical-to-electrical conversion unit and that correspond to the M optical filters. In the second case, a hyper spectral or multispectral optical signal is required. For example, when the electronic device in which the optical filter array 100 is located performs object recognition, depth detection, light source estimation, or another task that requires abundant spectral information, it is considered as the second case. In other words, the second case is a non-image shooting mode. The non-image shooting mode may be any one of the following modes: an object recognition mode, a light source estimation mode, a depth detection mode, or another mode, which is not exhaustive herein. Object recognition recognizes a type of a target object. Deep detection detects a depth value of a target object.

When the optical filter array 100 is configured in the electronic device, if the optical-to-electrical conversion unit is specifically represented as an optical-to-electrical conversion circuit. An analog-to-digital conversion unit is further configured in the electronic device. The analog-to-digital conversion unit is configured to convert analog electrical signals that are generated by the optical-to-electrical conversion unit and that correspond to the M optical filters into digital electrical signals, to perform subsequent operations such as illumination estimation, demosaicing, noise reduction, and white balance processing.

Further, if no processor is configured in the image sensor, an electronic device in which the image sensor is located may determine whether the electronic device starts the image sensor based on the image shooting mode. When determining that the electronic device is in the image shooting mode, that is, the image sensor works in the image shooting mode, the electronic device controls a combining unit to be enabled, that is, controls the combining unit to work. In this way, the combining unit may combine the electrical signals corresponding to the m optical filters. When determining that the electronic device is in the non-image shooting mode, that is, the image sensor works in the non-image shooting mode, the electronic device controls the combining unit to be disabled, that is, controls the combining unit not to work. In this way, the optical-to-electrical conversion module in the image sensor directly outputs the electrical signals corresponding to the m optical filters.

If a processor is configured in the image sensor, when the electronic device determines that the electronic device is in the image shooting mode, the electronic device sends a first instruction to the image sensor. In response to the first instruction, the image sensor controls the combining unit to be enabled, that is, controls the combining unit to work. In this way, the combining unit may combine the electrical signals corresponding to the m optical filters. When the electronic device determines that the electronic device is in the non-image shooting mode, the electronic device sends a second instruction to the image sensor. In response to the second instruction, the image sensor controls the combining unit to be disabled, that is, controls the combining unit not to work. In this way, the optical-to-electrical conversion module in the image sensor directly outputs the electrical signals corresponding to the m optical filters.

In this embodiment of this application, an RGB imaging technology is compatible when spectral information of the target object is collected by the hyper spectral or multispectral optical filter array, and can directly output electrical signals generated by the optical-to-electrical conversion unit after the optical-to-electrical conversion unit converts optical signals in N spectral bands into the electrical signals. In other words, the output electrical signals may carry hyper spectral or multispectral information, thereby expanding application scenarios of this solution.

For a structure of the optical filter, the optical filter is sometimes also referred to as a color filter, and is an optical device configured to select a required spectral band. Light that can pass through the optical filter and an optical signal that is of the target object and that can be obtained by the optical filter are within a same spectral band range.

In an implementation, the optical filter is manufactured based on structural optics. For example, the optical filter may be a nano-hole structure, a waveguide grating structure, a multi-layer interference thin film structure, or the like. This is not limited herein.

For more intuitive understanding of this solution, refer to FIG. 2. FIG. 2 is a schematic diagram of three structures of an optical filter in an optical filter array 100 according to an embodiment of this application. FIG. 2 includes three sub-diagrams (a), (b), and (c). In the sub-diagram (a) of FIG. 2, an optical filter is a nano-hole structure. Interference of a surface plasmon polariton of adjacent holes is used as a trigger for selective transmission of light. In the nano-hole type, different optical filters are designed by adjusting a size of a hole diameter of a nano-hole processed by using a metal material and a spacing between nano-holes. In the sub-schematic diagram (b) of FIG. 2, the optical filter is a waveguide grating structure. Surface plasmon polariton metal is introduced into a micro-nano grating structure, so that absorption and scattering functions of the surface plasmon polariton are superposed in a micro-nano grating based on optical diffraction. A micro-nano periodic grating structure may be used as a dispersion medium for selecting a band. Parameters such as a period and a fill factor of the grating structure may be changed, and thereby features such as absorption, scattering, diffraction, and polarization of light can be controlled, to implement a filtering feature.

In the sub-schematic diagram (c) of FIG. 2, the optical filter is a multi-layer interference thin film structure. Based on different main physical mechanisms that cause optical filtering, the structure may be classified into a metal insulator metal (metal insulator metal, MIM) type based on a localized surface plasmon polariton, and a Fabry-Perot (fabry-perot, FP) type based on multi-beam interference. Top-layer metal of the MIM-type filter structure generally has a micro-nano structure. Top-layer localized surface plasmon polariton resonance works with upper-layer and lower-layer antiparallel metal surface currents. In this way, the MIM structure absorbs light in a specific band, thereby implementing a filtering function. The FP type filter structure uses two layers of semi-transmissive semi-reflective films to form a reflection layer, uses a stop layer intermediately to form a resonator, and uses multi-beam interference to transmit or reflect light with constructive interference. This mode does not require top-layer nanostructure. Generally, only optical performance and a manufacturing process of each film layer are considered. It should be understood that, the examples in FIG. 2 are merely for ease of understanding this solution, and are not intended to limit this solution.

In another implementation, the optical filter is manufactured by using a chemical dye material. Specifically, the optical filter may be made of plastic or a glass sheet and a special dye. Further, transmittance of the glass sheet is originally similar to that of the air, and all colored light can pass through the glass sheet. Therefore, the glass sheet is transparent. However, after the glass sheet is dyed with the dye, a molecular structure changes, a refractive index also changes, and passing of some colored light changes. For example, a red plastic optical filter allows only red light to pass through. For another example, a beam of white light becomes a beam of blue light after passing through a blue glass optical filter.

M is an integer greater than or equal to N, and N is an integer greater than 3. For example, a value of N may be 4, 6, 8, 9, 12, 16, 27, 36, or another value. A value of M may be 4, 8, 9, 12, 16, 20, 36, or another value. Optionally, N is an integer greater than 3 and less than or equal to 25. Correspondingly, a value of M may be an integer greater than 3 and less than or equal to 25. A larger value of N indicates that more abundant spectral information is obtained. Correspondingly, an image generation process is more complex. Therefore, values of M and N may be determined with reference to a requirement for spectral information abundance in an actual application scenario, a processing capability of a processor, and the like. This is not limited herein.

An optical filter array 100 may be in a rectangular shape, an "L" shape, a concave shape, an "E" shape, or another shape. This is not limited herein.

Each of the M optical filters corresponds to at least one optical-to-electrical conversion unit. The optical-to-electrical conversion unit may be specifically represented as an optical-to-electrical conversion circuit, or may be computer code. A specific representation form of the optical-to-electrical conversion unit is not limited herein. If the optical-to-electrical conversion unit is the optical-to-electrical conversion circuit, the optical-to-electrical conversion unit outputs an analog electrical signal. In one case, each optical filter corresponds to one optical-to-electrical conversion unit. In other words, each optical-to-electrical conversion unit is configured to convert an optical signal obtained by one optical filter into an electrical signal. Alternatively, each of the M optical filters corresponds to a plurality of optical-to-electrical conversion units. In other words, the plurality of optical-to-electrical conversion units jointly convert an optical signal obtained by one optical filter into an electrical signal.

For more intuitive understanding of this solution, refer to FIG. 3. FIG. 3 is a schematic diagram of two correspondences between an optical filter in an optical filter array and an optical-to-electrical conversion unit according to an embodiment of this application. FIG. 3 includes two sub-schematic diagrams (a) and (b). In the sub-schematic diagram (a) of FIG. 3, an optical filter is disposed above an optical-to-electrical conversion unit. The optical filter and the optical-to-electrical conversion unit are in a one-to-one correspondence. In other words, one optical filter is disposed above one optical-to-electrical conversion unit. In the sub-schematic diagram (b) of FIG. 3, one optical filter is disposed above a plurality of optical-to-electrical conversion units. As shown in FIG. 3, one optical filter is disposed above every two optical-to-electrical conversion units. It should be understood that, the examples in FIG. 3 are merely for ease of understanding this solution, and are not intended to limit this solution.

One optical filter array 100 may include K combining units corresponding to the K groups of optical filters. Each combining unit may be specifically represented as a combining circuit, or may be represented as computer code. A specific representation form of the combining unit is not limited herein. A combination manner may be obtaining a maximum value, obtaining an average value, and superposition. Optionally, the combining unit is specifically configured to superpose electrical signals corresponding to all optical filters in a first group, to obtain a combined analog electrical signal. Each combining unit in the K combining units performs the foregoing operations, to obtain K combined analog electrical signals. Any group in the K groups includes at least two optical filters. Quantities of optical filters included in different groups in the K groups may be the same or different. In this embodiment of this application, electrical signals corresponding to all optical filters in the first group are combined by superposing an electrical signal corresponding to each optical filter. This solution is simple and easy to implement.

When the optical filter array 100 is configured in the electronic device, an analog-to-digital conversion unit may be further configured in the electronic device. The analog-to-digital conversion unit is configured to convert K combined analog electrical signals output by the combining unit into K combined digital electrical signals, to perform subsequent signal processing operations such as illumination estimation, demosaicing, noise reduction, and white balance processing.

Optical signals that are of the target object in the N spectral bands and that are obtained by using the M optical filters need to be mapped to the H spectral channels. The H spectral channels are divided based on any one of an RGB channel, an RGGB channel, an RYB channel, an RYYB channel, an RWWB channel, or an RBGIR channel. For example, optical signals in the N spectral bands are divided based on the RGB channel. The N spectral bands may include six different spectral bands: R1, R2, G1, G2, G3, G4, B 1, and B2. Optical signals of the target object in the two spectral bands R1 and R2 are mapped to an R channel in the RGB channel. Optical signals of the target object in the four spectral bands G1, G2, G3, and G4 are mapped to a G channel in the RGB channel. Optical signals of the target object in the two spectral bands B1 and B2 are mapped to a B channel in the RGB channel. It should be understood that the example herein is merely for ease of understanding this solution, is not used to limit this solution. In this embodiment of this application, a plurality of division manners of the H spectral channels corresponding to the K groups of optical filters are listed, to improve implementation flexibility of this solution and expand application scenarios of this solution.

The M optical filters are divided into the K groups, so that the optical signals that are of the target object in the N spectral bands and that are obtained by using the M optical filters are also divided into the K groups. A concept of a spectral channel reflects a capability of the optical filter array 100 to obtain a spectral band. Each operating band of the optical filter array 100 is referred to as a channel. The optical filter array 100 can generate information about the target object in several spectral bands, and is referred to as an optical filter array 100 of several spectral channels. Although the optical filter array 100 can obtain the optical signals of the target object in the N spectral bands, the optical signals in the N spectral bands need to be mapped to H spectral bands. In other words, the optical signals in the N spectral bands need to be mapped to H spectral channels.

K is an integer greater than or equal to 1 and less than N. For example, a value of K may be 3, 4, 5, or the like. A specific value of K needs to be determined based on a type of image that needs to be output in an actual application scenario. This is not limited herein. R is a red channel, G is a green channel, B is a blue channel, Y is a yellow channel, W is a white channel, and IR is a near-infrared channel. An optical filter corresponding to the white channel may be a fully transparent light transmissive sheet. Contour information of the target object can be collected by using the fully transparent light transmissive sheet.

Further, the foregoing K groups of optical filters correspond to the H spectral bands. Different groups of optical filters may correspond to a same spectral band. In other words, different groups of optical filters in the K groups may correspond to different types of spectral channels, or may correspond to a same type of spectral channels. In an example, the optical signals that are of the target object in the N spectral bands and that are obtained by using the M optical filters are mapped to the RGGB channel. In other words, a value of K is 4, and a value of H is 3. Four groups are respectively mapped to the R channel, the G channel, the G channel, and the B channel. A spectral band corresponding to the R channel is a red visible optical band with a wavelength of 0.630 to 0.680. A spectral band corresponding to the G channel is a green visible optical band with a wavelength of 0.525 to 0.600. A spectral band corresponding to the B channel is a blue visible optical band with a wavelength of 0.450 to 0.515. In this case, spectral bands corresponding to two groups of optical filters mapped to the G channel are the same. It should be understood that the examples herein are merely used to facilitate understanding of a correspondence between the K groups of optical filters and the H spectral bands, and is not intended to limit this solution.

The following describes a correspondence between the N spectral bands and the H spectral channels. The H spectral bands corresponding to the H spectral channels can form a first spectral band. In one case, the N spectral bands are located within a range of the first spectral band. The H spectral bands are further divided into the N spectral bands, or the N spectral bands are sub-spectral bands of the H spectral bands. There is a mapping relationship between the m optical filters and a first spectral channel in the H spectral channels. The first spectral channel is one spectral channel in the H spectral channels, and the first spectral channel corresponds to the first spectral band. The at least two different spectral bands corresponding to the m optical filters are located within the range of the first spectral band.

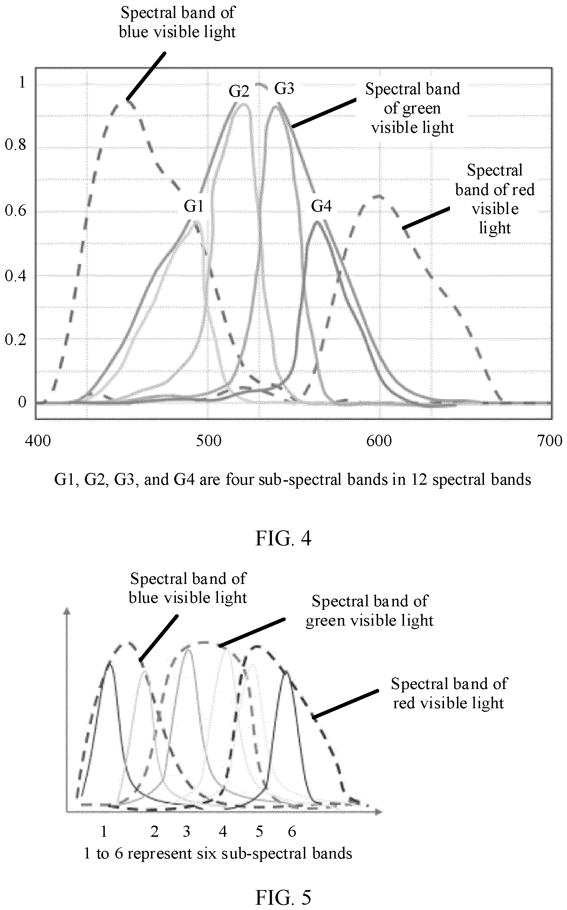

For more intuitive understanding of this solution, refer to FIG. 4 to FIG. 7. FIG. 4 to FIG. 7 are schematic diagrams of four correspondences between N spectral bands in an optical filter array and spectral bands of H spectral channels according to an embodiment of this application. As shown in FIG. 4 to FIG. 7, for example, the H spectral channels correspond to three spectral bands. First, as shown in FIG. 4, for example, a value of H is 3 and a value of N is 12. The three spectral channels are respectively configured to capture optical signals of a target object in a spectral band of blue visible light, a spectral band of green visible light, and a spectral band of red visible light. Optical signals of the target object in 12 spectral bands can be obtained by using M optical filters, and the 12 spectral bands are all located in the three to-be-mapped spectral bands. In other words, the N spectral bands are all located in the first spectral band. As shown in FIG. 4, for example, the spectral band of green visible light corresponds to four sub-spectral bands (that is, G1, G2, G4, and G4 in FIG. 4). FIG. 4 does not show correspondences between the spectral band of blue visible light and the spectral band of red visible light and their respective sub-spectral bands. The correspondences are similar to a correspondence between the spectral band of green visible light and sub-spectral bands.

As shown in FIG. 5, for example, a value of H is 3 and a value of N is 6. The three spectral channels are respectively configured to capture optical signals of a target object in a spectral band of blue visible light, a spectral band of green visible light, and a spectral band of red visible light. Optical signals of the target object in six spectral bands can be obtained by using M optical filters, and the six spectral bands are all located in the three to-be-mapped spectral bands. The spectral band of the blue visible light, the spectral band of the green visible light, and the spectral band of the red visible light each correspond to two sub-spectral bands.

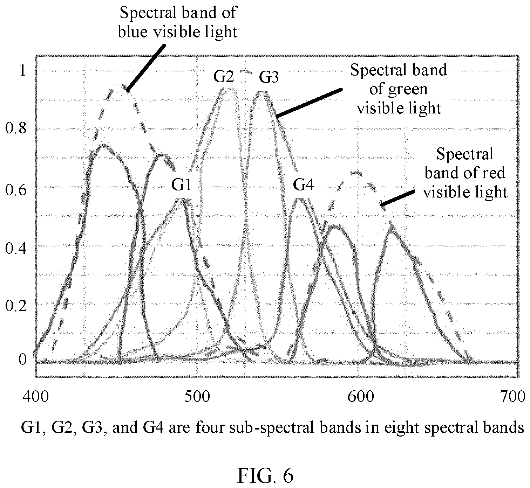

As shown in FIG. 6, for example, a value of H is 3 and a value of N is 8. The three spectral channels are respectively configured to capture optical signals of a target object in a spectral band of blue visible light, a spectral band of green visible light, and a spectral band of red visible light. Optical signals of the target object in eight spectral bands can be obtained by using M optical filters, and the eight spectral bands are all located in the three to-be-mapped spectral bands. The spectral band of the green visible light corresponds to four sub-spectral bands, and the spectral band of the blue visible light and the spectral band of the red visible light respectively correspond to two sub-spectral bands.

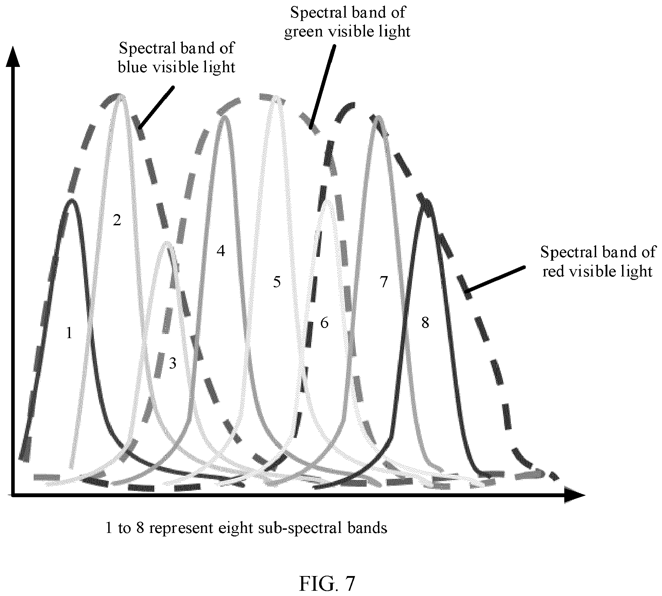

As shown in FIG. 7, for example, a value of His 3 and a value of N is 8. The three spectral channels are respectively configured to capture optical signals of a target object in a spectral band of blue visible light, a spectral band of green visible light, and a spectral band of red visible light. Optical signals of the target object in eight spectral bands can be obtained by using M optical filters, and the eight spectral bands are all located in the three to-be-mapped spectral bands. The spectral band of the blue visible light, the spectral band of the green visible light, and the spectral band of the red visible light each correspond to three sub-spectral bands. It should be understood that, the examples in FIG. 4 to FIG. 7 are merely for ease of understanding this solution, and are not intended to limit this solution.

In conclusion, a third group of optical filters in the K groups corresponds to a second spectral channel in the H spectral channels. The third group is any group in the K groups. The second spectral channel is a spectral channel corresponding to the third group in the H spectral channels. The third group of optical filters is configured to obtain an optical signal of the target object in at least one spectral band. The at least one spectral band corresponding to the third group is located within a spectral band range of the second spectral channel.

In another case, a spectral band that is in the N spectral bands and that has a proportion greater than or equal to a preset proportion is located within a range of the first spectral band. A spectral band that is in the at least two different spectral bands corresponding to the m optical filters and that has a proportion greater than or equal to the preset proportion is located within the range of the first spectral band. A value of the preset proportion may be 98 percent, 95 percent, 90 percent, or another value. In other words, most spectral bands in the N spectral bands are located in the first spectral band. In this embodiment of this application, the at least two different spectral bands corresponding to the m optical filters are located within the range of the first spectral band. Alternatively, the spectral band that is in the at least two different spectral bands corresponding to the m optical filters and that has the proportion greater than or equal to the preset proportion is located within the range of the first spectral band. In other words, the N spectral bands are highly similar to mapped H spectral bands. This improves quality of a finally obtained image.

In another case, a relationship between the N spectral bands and the first spectral band is random. Alternatively, a spectral band having a proportion less than a preset proportion in the N spectral bands is located within a range of the first spectral band.

Further, the K groups of optical filters are configured to obtain optical signals of the target image in the H spectral bands. Any group of optical filters in the K groups is configured to obtain an optical signal of the target object in at least one spectral band. Quantities of spectral bands corresponding to different groups may be the same or different.

Still further, in an implementation, a value of N is 12. Each group of optical filters in the K groups is configured to obtain spectrum information of the target object in four spectral bands. Because spectral bands corresponding to different groups may be the same, a value of K in this implementation may be 3, 4, 5, or another value. For example, refer to FIG. 4. For a specific understanding of FIG. 4, refer to the foregoing description. Details are not described herein again.

In another implementation, a value of N is 6. Each group of optical filters in the K groups is configured to obtain spectrum information of the target object in two spectral bands. Similarly, in this implementation, a value of K may be 3, 4, 5, or another value. For example, refer to FIG. 5. For a specific understanding of FIG. 5, refer to the foregoing description. Details are not described herein again.

In another implementation, a value of N is 8. The K groups include at least one first group and at least one second group. Optical filters in the first group are configured to obtain spectral information of the target object in four spectral bands. Optical filters in the second group are configured to obtain spectral information of the target object in two spectral bands. The first group and the second group are two different groups in the K groups. For example, refer to FIG. 6. For a specific understanding of FIG. 6, refer to the foregoing description. Details are not described herein again.

In this embodiment of this application, allocation of spectral bands corresponding to different groups when values of N are different is provided, to improve implementation flexibility of this solution. In addition, a larger quantity of spectral bands corresponding to a same group indicates more abundant spectral information obtained by the group, and more computer resources are required in a subsequent processing process. In the H channels corresponding to the K groups, different channels may be of different significance. Therefore, a larger quantity of sub-spectral bands are allocated to a group corresponding to a channel of greater significance. A smaller quantity of sub-spectral bands are allocated to a group corresponding to a channel of less significance. This improves abundance of obtained spectral information while saving computer resources.

For example, when an RGB image needs to be generated, three channels corresponding to the K group are respectively an R channel, a G channel, and a B channel. During actual imaging, the G channel is a main luminance channel, and is also an important information channel that determines color reproduction effect of an image. In other words, the G channel is more significant than the R channel and the B channel. In this case, more sub-spectral bands may be allocated to a group having a mapping relationship with the G channel. It should be understood that this example is only for ease of understanding. When the three channels corresponding to the K groups are respectively an RYB channel, an RWWB channel, or an RBGIR channel, the mapping relationship between the N sub-spectral bands and the K spectral channels may be adjusted based on an actual situation.

Any group of optical filters in the K groups includes at least one optical filter, and the at least one optical filter includes an adjacent optical filter. In this embodiment of this application, an optical signal obtained by one group is mapped to an optical signal of one channel. In an RGB, RYB, RWWB, RBGIR, or another imaging technology, at least one optical filter corresponding to the channel includes the adjacent optical filter. In other words, similarity to an RGB, RYB, RWWB, RBGIR, or another imaging technology is increased in terms of optical filter location allocation, to reduce difficulty in a subsequent signal processing process.

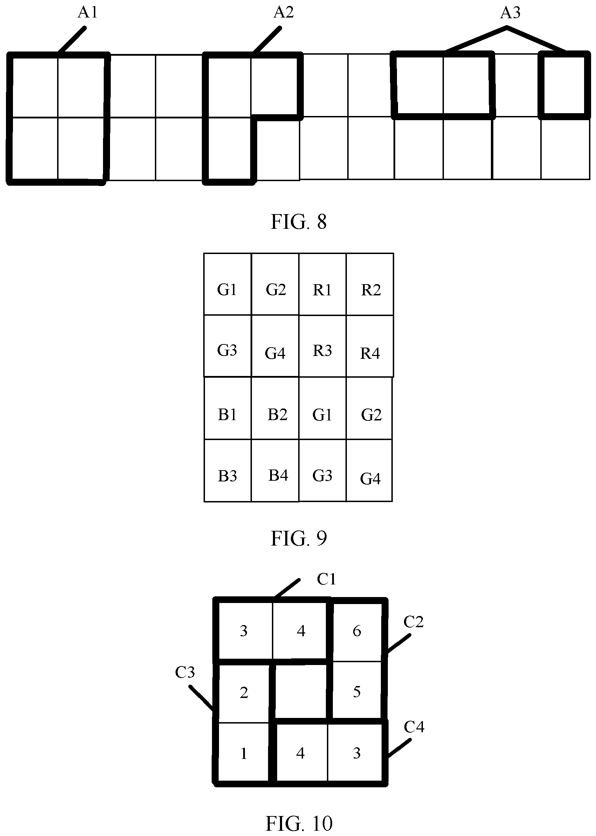

For more intuitive understanding of this solution, refer to FIG. 8. FIG. 8 is a schematic diagram of three location relationships between a plurality of optical filters in a group of optical filters in an optical filter array according to an embodiment of this application. Both groups A1 and A2 include adjacent optical filters. Optical filters of a group A3 shown include a non-adjacent optical filter. It should be understood that the examples in FIG. 8 are merely for ease of understanding this solution, and are not intended to limit this solution.

For a location relationship between optical filters included in different groups of the K groups of optical filters, in an implementation, the optical filters included in different groups in the K groups of optical filters are completely different. In other words, no overlapping optical filter exists in the optical filters included in different groups in the K groups of optical filters. In this embodiment of this application, because no overlapping optical filter exists in the optical filters included in different groups in the K groups of optical filters, information obtained by each optical filter is not reused, and there is no information redundancy. This saves computer resources.

For more intuitive understanding of this solution, refer to FIG. 9 and FIG. 10. FIG. 9 and FIG. 10 are two schematic diagrams of a location relationship between optical filters included in different groups in an optical filter array according to an embodiment of this application. First, refer to FIG. 9. As shown in FIG. 9 and FIG. 10, for example, a value of K is 4. Four optical filters in an upper left corner belong to a first group. Four optical filters in an upper right corner belong to a second group. Four optical filters in a lower left corner belong to a third group. Four optical filters in the lower right corner belong to a fourth group. No overlapping optical filter exists in the optical filters included in the four groups. Refer to FIG. 10, C1, C2, C3, and C4 respectively represent four groups. No overlapping optical filter exists in optical filters included in the four groups. It should be understood that, the examples in FIG. 9 and FIG. 10 are merely for ease of understanding this solution, and are not intended to limit this solution.

In another implementation, optical filters included in different groups in the K groups of optical filters are partially but not completely the same. In other words, at least one overlapping optical filter exists between different groups. In this embodiment of this application, because a same optical filter exists in different groups in the K groups of optical filters, a spatial structure is more compact, to reduce difficulty in a subsequent signal processing process.

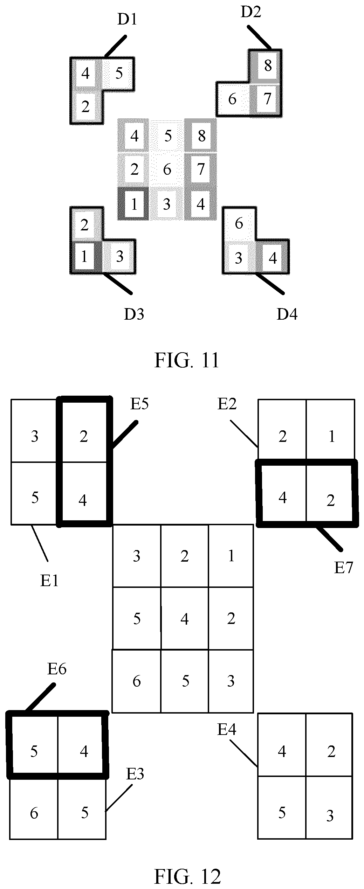

For more intuitive understanding of this solution, refer to FIG. 11 and FIG. 12. FIG. 11 and FIG. 12 are two schematic diagrams of a location relationship between optical filters included in different groups in an optical filter array according to an embodiment of this application. First, as shown in FIG. 11, for example, a value of M is 9, a value of N is 8, and a value of K is 4. D1, D2, D3, and D4 respectively represent four groups. Both a group represented by D1 and a group represented by D3 include an optical filter numbered 2. Both a group represented by D2 and a group represented by D4 include an optical filter numbered 6. In other words, optical filters included in the group represented by D1 and the group represented by D3 are partially but not completely the same. Optical filters included in the group represented by D2 and the group represented by D4 are partially but not completely the same.

As shown in FIG. 12, for example, a value of Mis 9, a value of N is 6, and a value of K is 4. E1, E2, E3, and E4 respectively represent four groups. Both a group represented by E1 and a group represented by E2 include two optical filters in E5. Both the group represented by E1 and a group represented by E3 include two optical filters in E6. Both the group represented by E1 and a group represented by E4 include an optical filter numbered 4. Both the group represented by E2 and the group represented by E3 include an optical filter numbered 4. Both the group represented by E2 and the group represented by E4 include two optical filters in E7. In other words, optical filters included in the groups represented by E1, E2, E3, and E4 are partially but not completely the same. It should be understood that the examples in FIG. 10 and FIG. 11 are merely intended to facilitate understanding of this solution, and are not intended to limit this solution.

Any group of optical filters in the K groups may be in a rectangular shape, a vertical straight-line shape, a horizontal straight-line shape, a positive "L" shape, a reverse "L" shape, an inverted "L" shape, a concave shape, or another shape. A specific shape presented by each group of optical filters is not limited herein. In this embodiment of this application, in an RGB channel, RGGB channel, RYB channel, RYYB channel, RWWB channel, RBGIR channel, or another technology, each group of optical filters is in a rectangular shape. Any group of optical filters in the K groups is also configured as a rectangular shape. This reduces difficulty in a mapping process.

For more intuitive understanding of this solution, refer to FIG. 10 to FIG. 11. Each group of optical filters in FIG. 10 and FIG. 11 is in a rectangular shape. Each group of optical filters in FIG. 10 is in a vertical straight-line shape or a horizontal straight-line shape. A group of optical filters in the group represented by D1 in FIG. 11 is in an inverted "L" shape. A group of optical filters in the group represented by D2 is in a reverse "L" shape. A group of optical filters in the group represented by D3 and D4 is an "L" shape. It should be understood that the examples herein are merely used to facilitate understanding of this solution, and is not intended to limit this solution.

Further, the following discloses several specific different implementations of the optical filter array 100.

In an implementation, optical filters included in different groups in the K groups of optical filters are completely different. A value of M is 16, a value of N is 12, and a value of K is 4. Each group of optical filters in the K groups includes four optical filters. Each group of optical filters in the K groups is configured to obtain spectral information of the target object in four spectral bands. A value of H is 3 or 4. In other words, the K groups of optical filters are mapped to three spectral channels or four spectral channels. When H is 3, the three spectral channels are any one of an RGB channel, an RGGB channel, an RYB channel, an RYYB channel, or an RWWB channel. When H is 4, the four spectral channels are RBGIR channels or spectral channels of other types.

For more intuitive understanding of this solution, refer to FIG. 4 and FIG. 9. In this implementation, a correspondence between 12 sub-spectral bands and three spectral channels is shown in FIG. 4. Grouping of four groups of optical filters is shown in FIG. 9. As shown in FIG. 9, for example, H is 3. The four groups of optical filters are mapped to the three channels R, G, and B. G1, G2, G3, and G4 in FIG. 9 can respectively capture optical signals of the target object in four spectral bands. The four spectral bands corresponding to G1, G2, G3, and G4 are all located in a spectral band of green visible light. Correspondingly, R1, R2, R3, and R4 in FIG. 9 can respectively capture optical signals of the target object in four spectral bands. The four spectral bands corresponding to R1, R2, R3, and R4 are all located in a spectral band of red visible light. B1, B2, B3, and B4 in FIG. 9 can respectively capture optical signals of the target object in four spectral bands. The four spectral bands corresponding to B1, B2, B3, and B4 are all located in a spectral band of blue visible light. It should be understood that the RGGB channel may also be replaced with the RYYB channel or the RWWB channel. Alternatively, in another embodiment, a value of H may be 4. The foregoing example is merely for ease of understanding this solution, is not used to limit this solution.

In another implementation, optical filters included in different groups in the K groups of optical filters are completely different. A value of M is 16, a value of N is 6, and a value of K is 4. Each group of optical filters in the K groups is configured to obtain spectral information of the target object in two spectral bands. A value of H is 3 or 4. To be specific, the K groups of optical filters are mapped to three spectral channels or four spectral channels.

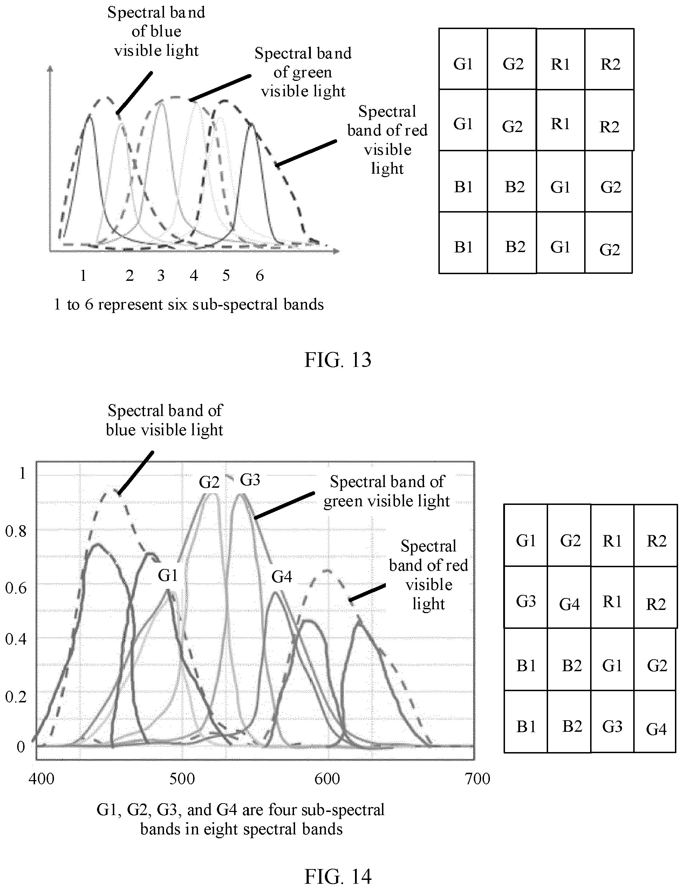

For more intuitive understanding of this solution, refer to FIG. 13. FIG. 13 is a schematic diagram of a grouping manner of an optical filter array according to an embodiment of this application. FIG. 13 includes a left sub-schematic diagram and a right sub-schematic diagram. The left sub-schematic diagram is the same as FIG. 5, and shows a correspondence between six sub-spectral bands and three spectral channels, which is not described herein again. The right sub-schematic diagram of FIG. 13 shows grouping of four groups of optical filters. Four optical filters in an upper left corner belong to a first group. Four optical filters in an upper right corner belong to a second group. Four optical filters in a lower left corner belong to a third group. Four optical filters in a lower right corner belong to a fourth group. No overlapping optical filter exists in the four groups. As shown in FIG. 13, for example, H is 3. The four groups of optical filters are mapped to three channels: R, G, and B. G1 and G2 in FIG. 13 can respectively capture optical signals of the target object in two spectral bands. The two spectral bands corresponding to G1 and G2 are both located in a spectral band of green visible light. Correspondingly, R1 and R2 in FIG. 13 can respectively capture optical signals of the target object in two spectral bands. The two spectral bands corresponding to R1 and R2 are located in a spectral band of red visible light. B1 and B2 in FIG. 13 can respectively capture optical signals of the target object in two spectral bands. The two spectral bands corresponding to B 1 and B2 are located in a spectral band of blue visible light. It should be understood that the RGGB channel may alternatively be replaced with the RYYB channel or the RWWB channel. Alternatively, a value of H in another embodiment may be 4. The foregoing example is merely used to facilitate understanding of this solution, and is not used to limit this solution.

In another implementation, optical filters in different groups in the K groups of optical filters are completely different. A value of M is 16, a value of N is 8, and a value of K is 4. The K groups include a first group and a second group. Optical filters in the first group are configured to obtain spectral information of the target object in four spectral bands. Optical filters in the second group are configured to obtain spectral information of the target object in two spectral bands. The first group and the second group are two different groups in the K groups. A value of H is 3 or 4. To be specific, the K groups of optical filters are mapped to three spectral channels or four spectral channels.

For more intuitive understanding of this solution, refer to FIG. 14. FIG. 14 is a schematic diagram of another grouping manner of an optical filter array according to an embodiment of this application. FIG. 14 includes a left sub-schematic diagram and a right sub-schematic diagram. The left sub-schematic diagram is the same as FIG. 6, and shows a correspondence between eight sub-spectral bands and three spectral channels, which is not described herein again. The right sub-schematic diagram of FIG. 14 shows a grouping situation of four groups of optical filters. Four optical filters in an upper left corner belong to a first group. Four optical filters in an upper right corner belong to a second group. Four optical filters in a lower left corner belong to a third group. Four optical filters in a lower right corner belong to a fourth group. No overlapping optical filter exists in the four groups. As shown in FIG. 14, for example, H is 3. Four groups of optical filters are mapped to three channels: R, G, and B. G1, G2, G3, and G4 in FIG. 14 can respectively capture optical signals of the target object in four spectral bands. The four spectral bands corresponding to G1, G2, G3, and G4 are all located in a spectral band of green visible light. Correspondingly, R1 and R2 in FIG. 14 can respectively capture optical signals of the target object in two spectral bands. The two spectral bands corresponding to R1 and R2 are located in a spectral band of red visible light. B1 and B2 in FIG. 14 can respectively capture optical signals of the target object in two spectral bands. The two spectral bands corresponding to B 1 and B2 are located in a spectral band of blue visible light. It should be understood that the RGGB channel may be replaced with the RYYB channel or the RWWB channel. Alternatively, a value of H in another embodiment may be 4. The foregoing example is merely for ease of understanding, and is not intended to limit this solution.

In this embodiment of this application, a plurality of specific implementations of the optical filter array 100 are provided, to improve implementation flexibility of this solution, and expand application scenarios of this solution. In addition, in the foregoing implementations, optical filters included in different groups are completely different. This avoids processing of easy information and a waste of computer resources.

In another implementation, optical filters included in different groups in the K groups of optical filters are partially but not completely the same. A value of M is 9, a value of N is 6, and a value of K is 4. Each group of optical filters in the K groups is configured to obtain spectral information of the target object in four spectral bands. Each group of optical filters in the K groups includes four optical filters, and one group of optical filters in the K groups is in a rectangular shape. A value of H is 3 or 4. To be specific, the K groups of optical filters are mapped to three spectral channels or four spectral channels.

For more intuitive understanding of this solution, refer to FIG. 12. E1, E2, E3, and E4 in FIG. 12 respectively represent the four groups. Numbers 1 to 6 in FIG. 12 represent six sub-spectral bands respectively. An optical filter included in the group represented by E1 is configured to obtain optical signals of the target object in four spectral bands: 3, 2, 5, and 4. For understanding of E2, E3, and E4, refer to the foregoing description of E1. Details are not described herein again. As shown in FIG. 12, for example, a value of His 3. E1 and E4 are mapped to a same spectral channel. It should be understood that the example in FIG. 12 is merely used to facilitate understanding of this solution, and is not intended to limit this solution.

In this embodiment of this application, a specific implementation of the optical filter array 100 is further provided, to further improve implementation flexibility of this solution. In addition, the optical filters included in different groups in the K groups of optical filters are partially but not completely the same, to reduce difficulty in a subsequent signal processing process.

In another implementation, optical filters included in different groups in the K groups of optical filters are partially but not completely the same. A value of M is 9, a value of N is 9, and a value of K is 4. Each group of optical filters in the K groups includes four optical filters. Each group of optical filters in the K groups is configured to obtain spectral information of the target object in three spectral bands. One group of optical filters in the K groups is in an L shape, an inverted L shape, or a reverse L shape. A value of H is 3 or 4. To be specific, the K groups of optical filters are mapped to three spectral channels or four spectral channels.

For more intuitive understanding of this solution, refer to FIG. 11. D1, D2, D3, and D4 in FIG. 11 respectively represent the four groups. Numbers 1 to 8 in FIG. 11 represent eight sub-spectral bands respectively. An optical filter included in the group represented by D1 is configured to obtain optical signals of the target object in three spectral bands 4, 5, and 2. For understanding of D2, D3, and D4, refer to the foregoing description of D1. Details are not described herein again. As shown in FIG. 11, for example, a value of H is still 3. D1 and D4 are mapped to a same spectral channel, and two groups of different spectral bands correspond to the same spectral channel. It should be understood that the example in FIG. 11 is merely for ease of understanding this solution, and is not intended to limit this solution.

In another implementation, optical filters included in different groups in the K groups of optical filters are completely different. A value of M is 8, a value of N is 6, and a value of K is 4. Each group of optical filters in the K groups includes two optical filters. Each group of optical filters in the K groups is configured to obtain spectral information of the target object in two spectral bands.

For more intuitive understanding of this solution, refer to FIG. 10 and FIG. 5. C1, C2, C3, and C4 in FIG. 10 respectively represent four groups. Numbers 1 to 6 in FIG. 10 respectively represent six sub-spectral bands. An optical filter included in a group represented by C1 is configured to obtain optical signals of the target object in two spectral bands 3 and 4. For understanding of C2, C3, and C4, refer to the foregoing description of C1. Details are not described herein again. As shown in FIG. 10 and FIG. 5, for example, a value of H is still 3. C1 and C4 are mapped to a same spectral channel. It should be understood that the examples in FIG. 10 and FIG. 5 are merely used to facilitate understanding of this solution, and are not intended to limit this solution.

In this embodiment of this application, two specific implementations of the optical filter array 100 are further provided, to further improve implementation flexibility of this solution.

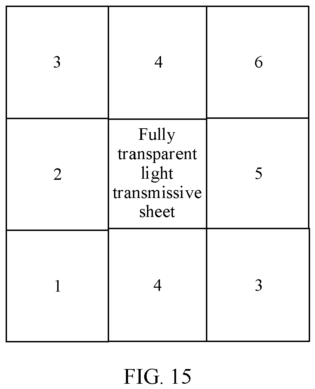

Optionally, when the H channels do not include W channels (namely, white channels), the optical filter array 100 may further include a fully transparent light transmissive sheet. The fully transparent light transmissive sheet is located in a central area of the optical filter array 100. Specifically, in an implementation, a value of M is 8, and a value of K is 4. Each group of optical filters in the K groups includes two optical filters. The fully transparent light transmissive sheet is located at a central location of eight optical filters. For more intuitive understanding of this solution, refer to FIG. 15. FIG. 15 is a schematic diagram of still another grouping manner of an optical filter array according to an embodiment of this application. For a grouping manner of the four groups in FIG. 15, refer to the foregoing description of FIG. 10. Details are not described herein again. A difference between FIG. 15 and FIG. 10 lies in that a fully transparent light transmissive sheet is disposed at a central location of eight optical filters. It should be understood that the example in FIG. 15 is merely for ease of understanding this solution, and is not used to limit this solution.

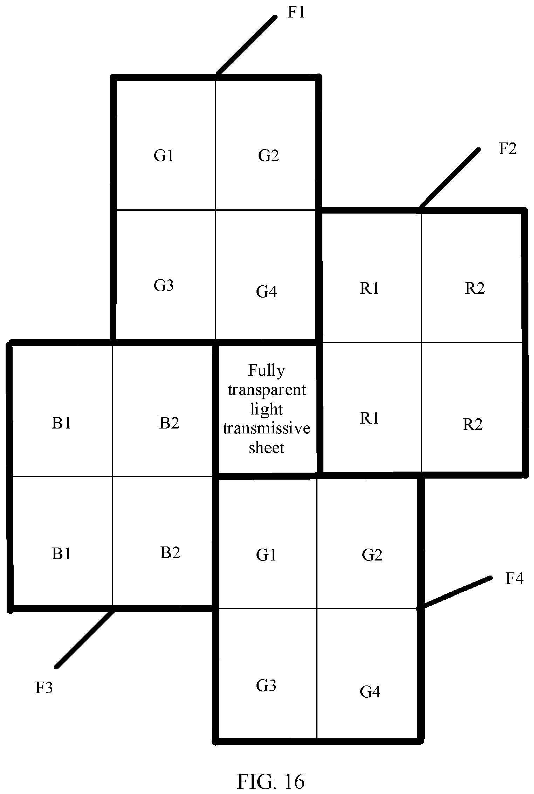

In an implementation, a value of M is 16, and a value of K is 4. Each group of optical filters in the K groups includes four optical filters. The fully transparent light transmissive sheet is located at a central location of eight optical filters. For more intuitive understanding of this solution, refer to FIG. 16. FIG. 16 is a schematic diagram of yet another grouping manner of an optical filter array according to an embodiment of this application. F1, F2, F3, and F4 respectively represent four groups. A fully transparent light transmissive sheet is disposed at a central location of sixteen optical filters. It should be understood that the example in FIG. 16 is merely for ease of understanding this solution, and is not used to limit this solution.

Further, the following discloses another implementation of the optical filter array 100. A value of N is 6, a value of K is 4, and a value of M is 8. The optical filter array 100 further includes a fully transparent light transmissive sheet. The fully transparent light transmissive sheet is located in a central area of eight optical filters. In this embodiment of this application, contour information of the target object may be obtained by the fully transparent light transmissive sheet, to provide assistance for mosaic processing in a subsequent signal processing process. In addition, optical signals captured by the fully transparent light transmissive sheet may be used as an auxiliary sensor of a light source spectrum, to provide assistance for white balance processing in a subsequent signal processing process.

After obtaining a digital electrical signal or a combined digital electrical signal, an electronic device in which the optical filter array 100 is located needs to perform signal processing, to generate an image of the target object. The foregoing signal processing process includes but is not limited to the following steps: illuminance estimation, demosaicing (demosaicing), noise reduction, white balance processing, and the like. It should be noted that, in an actual case, a signal processing process may include more or fewer steps, and this is not limited herein.

The illumination estimation enables a signal to meet a preset standard (international standardization organization, ISO). For example, the electronic device is a camera. The standard is a speed standard of the camera. To achieve the preset standard, a processor of the camera applies a gain on a combined digital signal.

A process of approximately recovering an original value based on a color around each pixel unit and finally obtaining a color image is referred to as demosaicing. There are different implementation methods for demosaicing. In a simple interpolation method, for example, a pixel unit including a green filter is precisely measured for green, and a red value of a pixel unit including a green filter may be calculated by interpolation of two adjacent red pixel units.

There are many noise reduction methods. For example, noise is usually sharp. Therefore, a blur can be used to reduce the noise. However, the blur also affects details. Therefore, an area with a strong signal in a removed part is recovered for an image.

A color deviation may be corrected through white balance processing. For example, H spectral channels are RGB channels. White balance corrects a point (a white point) with equal RGB. Correction may be implemented by separately scaling the three channels. White balance processing adjusts, at different color temperatures, a color circuit inside a camera to offset color cast of a shot image and make the image closer to a visual habit of a human eye. The white balance may also be simply understood as that at any color temperature, standard white shot by the camera is adjusted by the circuit, so that the standard white is still white after imaging. It should be noted that the foregoing process is merely an example for description, and more steps may be included in an actual application scenario. According to the foregoing method, data obtained by using a first-type optical filter array is processed, data obtained by using a second-type optical filter array is processed, and processed data is fused, to obtain a hyper spectral high-resolution image. For example, the following provides a method for fusing processed data to obtain a hyper spectral high-resolution image.

2. The electrical signals corresponding to the group of optical filters are combined in the optical filter array.

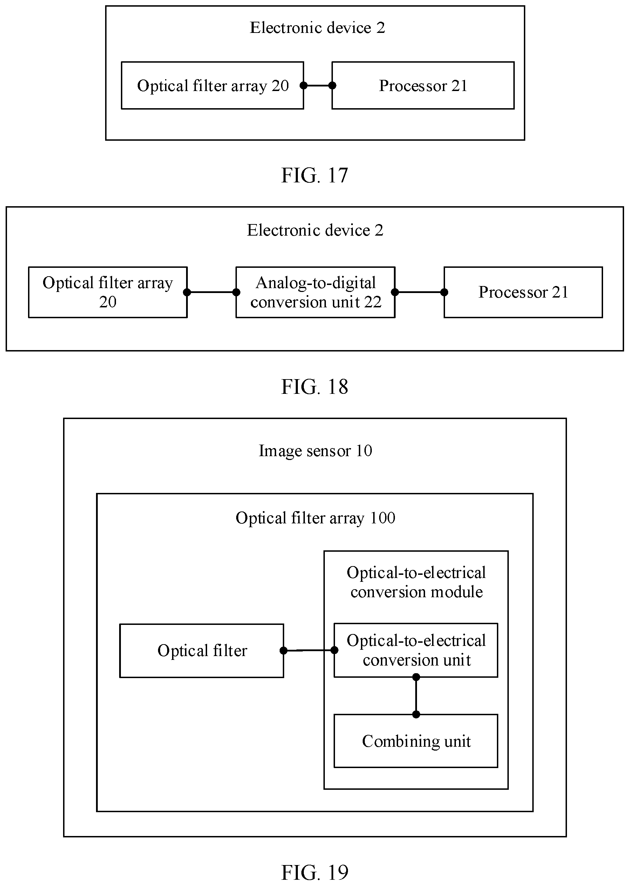

FIG. 17 is a schematic diagram of a structure of an electronic device according to an embodiment of this application. The electronic device 2 includes at least one optical filter array 20 and a processor 21. A difference between the optical filter array 20 and the optical filter array 100 described in FIG. 1 to FIG. 17 lies in that the optical filter array 20 in this embodiment does not include the combining unit in the optical filter array 100. For other parts, refer to the foregoing descriptions. Details are not described herein again. The electronic device 2 may be specifically represented as any one of the following devices: an image sensor, a camera, a mobile terminal, an intelligent vehicle or a surveillance device.

The processor 21 is configured to: in the first case, combine the electrical signals corresponding to the m optical filters to obtain the combined electrical signal, and generate an image of the target object based on the combined electrical signal; and in the second case, generate a hyper spectral image or a multispectral image of the target object based on the electrical signals corresponding to the m optical filters. In this embodiment of this application, the combining unit is not disposed in the optical filter array. The processor combines electrical signals corresponding to all optical filters in a group in a data processing process. This provides another implementation solution that is compatible with an RGB imaging technology when spectral information of the target object is collected by the hyper spectral or multispectral optical filter array, to improve implementation flexibility of this solution. In addition, in this implementation solution, no complex signal processing is required, thereby reducing costs.

FIG. 18 is a schematic diagram of another structure of an electronic device according to an embodiment of this application. The electronic device 2 further includes an analog-to-digital conversion unit 22. The analog-to-digital conversion unit 22 is configured to convert an analog electrical signal generated by an optical-to-electrical conversion unit in the optical filter array 20 into a digital electrical signal. The processor 21 is specifically configured to: in the first case, superpose digital electrical signals corresponding to the m optical filters, that is, add the digital electrical signals corresponding to the m optical filters, to obtain a combined digital electrical signal. The processor 21 performs the foregoing operations on each group of optical filters in the K groups, to obtain K combined digital electrical signals, and then may perform subsequent signal processing based on the K combined digital electrical signals, to generate an image of the target object. A digital electrical signal may be specifically represented as a value. A value range of the digital electrical signal is related to a bit width of analog-to-digital conversion. If the bit width is 8, the value range of the digital electrical signal is 0 to 255. If the bit width is 12, the value range of the digital electrical signal is 0 to 4096.

In the second case, after the analog-to-digital conversion unit 22 converts an analog electrical signal generated by an optical-to-electrical conversion unit in the optical filter array 20 into a digital electrical signal, the processor 21 does not need to combine the data electrical signal, and directly generates a hyper spectral image or a multispectral image of the target object based on the obtained digital electrical signal that carries the information about the N spectral bands.

Further, for descriptions of the first case and the second case, refer to descriptions in FIG. 1 to FIG. 16. Details are not described herein again.

Based on the embodiments corresponding to FIG. 1 to FIG. 18, an embodiment of this application further provides an image sensor. FIG. 19 is a schematic diagram of a structure of this image sensor according to this embodiment of this application. The image sensor 10 includes at least one optical filter array 100. Different optical filter arrays 100 are fixedly connected. For the optical filter array 100, refer to descriptions in the embodiments corresponding to FIG. 1 to FIG. 16. Details are not described herein again. Optionally, the image sensor 10 may further include a low spectral optical filter array. The optical filter array 100 is fixedly connected to the low spectral optical filter array.

The image sensor 10 may be configured in various types of electronic devices. The electronic device is any one of the following devices: a camera, a mobile terminal, an intelligent vehicle and a surveillance device.

Further, optionally, the image sensor may further include a processor. The processor is configured to generate an image of a target object based on a combined electrical signal generated by the optical filter array 100 in the first case. Optionally, the processor 11 is configured to generate an image of a target object based on a combined electrical signal generated by each optical filter array 100 and an electrical signal generated by the low spectral optical filter array. The processor is further configured to generate, in the second case, a hyper spectral image or a multispectral image of the target object based on electrical signals that are generated by the optical-to-electrical conversion unit in the optical filter array 100 and that correspond to the M optical filters. For a specific implementation process, refer to descriptions in the embodiments corresponding to FIG. 1 to FIG. 16. Details are not described herein again.

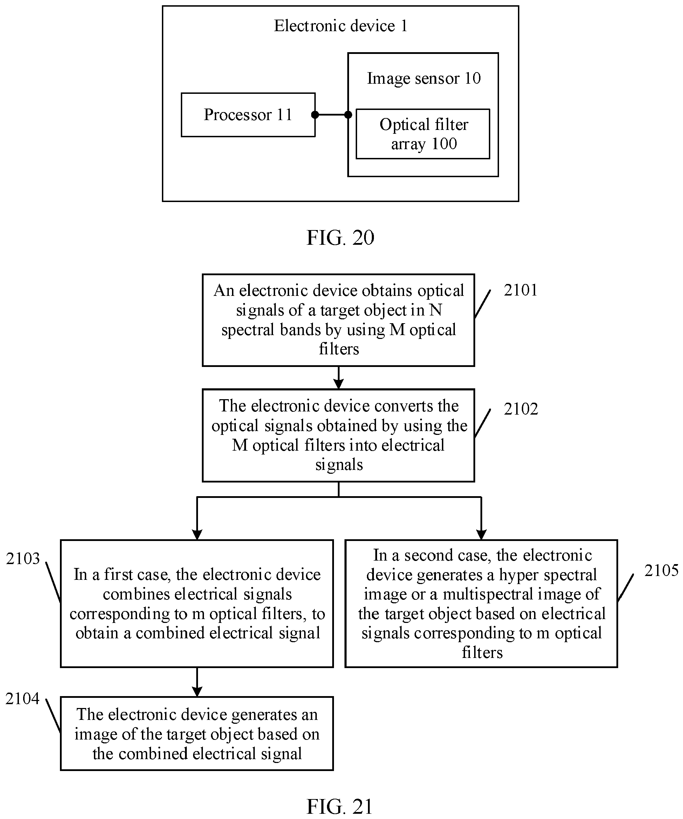

An embodiment of this application further provides an electronic device. FIG. 20 is a schematic diagram of a structure of this electronic device according to this embodiment of this application. The electronic device 1 includes an image sensor 10 and a processor 11. The image sensor 10 includes at least one optical filter array 100. For the optical filter array 100, refer to the descriptions in the embodiments corresponding to FIG. 1 to FIG. 16. Details are not described herein again. Optionally, the image sensor 10 may further include a low spectral optical filter array. The optical filter array 100 is fixedly connected to the low spectral optical filter array.

The processor 11 is configured to generate an image of a target object based on a combined electrical signal generated by the optical filter array 100 in the first case. Optionally, the processor 11 is configured to generate an image of a target object based on a combined electrical signal generated by each optical filter array 100 and an electrical signal generated by the low spectral optical filter array. The processor 11 is further configured to generate, in the second case, a hyper spectral image or a multispectral image of the target object based on electrical signals that are generated by the optical-to-electrical conversion unit in the optical filter array 100 and that correspond to the M optical filters. For a specific implementation process, refer to descriptions in the embodiments corresponding to FIG. 1 to FIG. 16. Details are not described herein again.

The processor 21 and the processor 11 each include but are not limited to one or more of a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof.

An embodiment of this application further provides a signal processing method. The method is applied to an electronic device 2. The electronic device 2 includes at least one optical filter array. The optical filter array may be the optical filter array 100 in FIG. 1 to FIG. 16, or may be the optical filter array 20 in FIG. 17 and FIG. 18. For specific structures of the optical filter array 100 and the optical filter array 20, refer to the descriptions in the embodiments corresponding to FIG. 1 to FIG. 16. FIG. 21 is a schematic flowchart of a signal processing method according to an embodiment of this application. The signal processing method provided in this embodiment of this application may include the following steps.

2101: An electronic device obtains optical signals of a target object in N spectral bands by using M optical filters.

2102: The electronic device converts the optical signals obtained by using the M optical filters into electrical signals.

In this embodiment of this application, for a specific implementation of step 2102 to step 2102, refer to the descriptions in the embodiments corresponding to FIG. 1 to FIG. 18. If an optical filter array in this embodiment is an optical filter array 100, the electrical signals in step 2102 are electrical signals generated by an optical-to-electrical conversion unit. If an optical filter array in this embodiment is an optical filter array 20, the electrical signals in step 2102 may be electrical signals generated by an analog-to-digital conversion unit.

2103: In the first case, the electronic device combines the electrical signals corresponding to the m optical filters, to obtain a combined electrical signal.

In this embodiment of this application, for a specific implementation of step 2102 to step 2103, refer to the descriptions in the embodiments corresponding to FIG. 1 to FIG. 18.

The M optical filters are divided into K groups. Any group in the K groups includes at least two optical filters. Any group of optical filters in the K groups is configured to obtain an optical signal of the target object in at least one spectral band. It should be noted that it is not possible that each group in the K groups is configured to obtain only an optical signal of the target object in one spectral band. In other words, at least one group in the K groups is configured to obtain optical signals of the target object in at least two spectral bands. One group in the K groups includes m optical filters. The m optical filters are configured to obtain optical signals of the target object in at least two spectral bands.

Specifically, if the optical filter array in this embodiment is the optical filter array 100 in FIG. 1 to FIG. 16, step 2103 may include: In the first case, the electronic device superposes, by using a combining unit in the optical filter array, the electrical signals corresponding to the m optical filters, to obtain a combined electrical signal. The electronic device performs the foregoing operations on each group in the K groups by using the combining unit in the optical filter array, to obtain K combined electrical signals.

If the optical filter array in this embodiment is the optical filter array 20 in FIG. 17 and FIG. 18, step 2103 may include: In the first case, the electronic device superposes, by using a processor, the electrical signals corresponding to the m optical filters, to obtain a combined electrical signal. The electronic device performs, by using the processor, the foregoing operations on each group in the K groups, to obtain K combined electrical signals.

2104: The electronic device generates an image of the target object based on the combined electrical signal.

In this embodiment of this application, for a specific implementation of step 2104, refer to the descriptions in the embodiments corresponding to FIG. 1 to FIG. 18. Details are not described herein again.

2105: In the second case, the electronic device generates a hyper spectral image or a multispectral image of the target object based on the electrical signals corresponding to the m optical filters.

In this embodiment of this application, in the second case, the electronic device no longer combines the electrical signals corresponding to the m optical filters. A process in which the electronic device generates the image of the target object based on the electrical signals in steps 2104 and 2105 has been described in the embodiments corresponding to FIG. 1 to FIG. 16. For an interaction process between the processor and the image sensor in the electronic device and concepts of various terms in steps 2101 to 2105, refer to the descriptions in the foregoing embodiments. Details are not described herein again.

An embodiment of this application further provides a computer-readable storage medium. The computer-readable storage medium stores instructions. When the instructions are run on a computer, the computer is enabled to perform the steps performed by the processor 21 in the method described in the embodiment shown in FIG. 21.

An embodiment of this application further provides a computer program. When the computer program is run on a computer, the computer is enabled to perform the steps performed by the processor 21 in the method described in the embodiment shown in FIG. 21.

An embodiment of this application further provides a circuit system. The circuit system includes a processing circuit. The processing circuit is configured to perform the steps performed by the processor 21 in the method described in the embodiment shown in FIG. 21.

The processor 21 and the processor 11 provided in this embodiment of this application may be specifically chips. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the steps performed by the electronic device in the method described in the embodiment shown in FIG. 21, or performs the steps performed by an input device in the method described in the embodiment shown in FIG. 21. Optionally, the storage unit is a storage unit in the chip, for example, a register or a cache; or the storage unit may be a storage unit that is in the radio access device and that is located outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits that are configured to control program execution of the method according to the first aspect.

Based on the description of the foregoing implementations, a person skilled in the art may clearly understand that this application may be implemented by software in addition to necessary universal hardware, or certainly may be implemented by dedicated hardware, including a dedicated integrated circuit, a dedicated CLU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement the embodiments, all or some of the embodiments may be implemented in a form of a computer program.

The computer program includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. An image sensor, wherein the image sensor comprises at least one optical filter array, the optical filter array is a hyper spectral or multispectral optical filter array, the optical filter array comprises m optical filters and an optical-to-electrical conversion module, and the optical-to-electrical conversion module comprises an optical-to-electrical conversion unit and a combining unit;
the m optical filters are configured to obtain optical signals of a target object in at least two different spectral bands;
the optical-to-electrical conversion unit is configured to convert the optical signals obtained by the m optical filters into electrical signals;
the combining unit is configured to combine the electrical signals corresponding to the m optical filters to obtain a combined electrical signal; and
the optical-to-electrical conversion module is configured to output the combined electrical signal, wherein the combined electrical signal is used to generate an image of the target object.

2. The image sensor according to claim 1, wherein
the combining unit is specifically configured to superpose the electrical signals corresponding to the m optical filters to obtain the combined electrical signal.

3. The image sensor according to claim 1 or 2, wherein
the optical filter array comprises M optical filters, the M optical filters are divided into K groups, the m optical filters belong to one group of optical filters in the K groups, and K is an integer greater than 1; and
there is a mapping relationship between the K groups of optical filters and H spectral channels, and the H spectral channels are divided based on any one of an RGB channel, an RGGB channel, an RYB channel, an RYYB channel, an RWWB channel, or an RBGIR channel.

4. The image sensor according to claim 3, wherein
there is a mapping relationship between the m optical filters and a first spectral channel in the H spectral channels, the first spectral channel is one spectral channel in the H spectral channels, and the first spectral channel corresponds to a first spectral band; and
the at least two different spectral bands corresponding to the m optical filters are located within a range of the first spectral band, or a spectral band that is in the at least two different spectral bands corresponding to the m optical filters and that has a proportion greater than or equal to a preset proportion is located within a range of the first spectral band.

5. The image sensor according to claim 1 or 2, wherein a group of optical filters comprising the m optical filters is in a rectangular shape.

6. The image sensor according to claim 1 or 2, wherein the m optical filters are adjacent optical filters.

7. The image sensor according to claim 3, wherein
optical filters comprised in different groups in the K groups of optical filters are completely different.

8. An electronic device, wherein the electronic device comprises at least one optical filter array and a processor, the optical filter array is a hyper spectral or multispectral optical filter array, and the optical filter array comprises m optical filters and an optical-to-electrical conversion unit;
the m optical filters are configured to obtain optical signals of a target object in at least two different spectral bands;
the optical-to-electrical conversion unit is configured to convert the optical signals obtained by the m optical filters into electrical signals; and
the processor is configured to combine the electrical signals corresponding to the m optical filters to obtain a combined electrical signal, and generate an image of the target object based on the combined electrical signal.

9. The electronic device according to claim 8, wherein
the processor is specifically configured to superpose the electrical signals corresponding to the m optical filters to obtain the combined electrical signal.

10. The electronic device according to claim 8 or 9, wherein
the optical filter array comprises M optical filters, the M optical filters are divided into K groups, the m optical filters belong to one group of optical filters in the K groups, and K is an integer greater than 1; and
there is a mapping relationship between the K groups of optical filters and H spectral channels, and the H spectral channels are divided based on any one of an RGB channel, an RGGB channel, an RYB channel, an RYYB channel, an RWWB channel, or an RBGIR channel.

11. The electronic device according to claim 10, wherein
there is a mapping relationship between the m optical filters and a first spectral channel in the H spectral channels, the first spectral channel is one spectral channel in the H spectral channels, and the first spectral channel corresponds to a first spectral band; and
the at least two different spectral bands corresponding to the m optical filters are located within a range of the first spectral band, or a spectral band that is in the at least two different spectral bands corresponding to the m optical filters and that has a proportion greater than or equal to a preset proportion is located within a range of the first spectral band.

12. The electronic device according to claim 8 or 9, wherein the electronic device is any one of the following devices: an image sensor, a camera, a mobile terminal, an intelligent vehicle, and a surveillance device.

13. An image sensor, wherein the image sensor comprises at least one optical filter array, the optical filter array is a hyper spectral or multispectral optical filter array, and the optical filter array comprises m optical filters and an optical-to-electrical conversion module;
the m optical filters are configured to obtain optical signals of a target object in at least two different spectral bands;
the optical-to-electrical conversion module is configured to: when the image sensor is in an image shooting mode, convert the optical signals obtained by the m optical filters into electrical signals, combine the electrical signals corresponding to the m optical filters to obtain a combined electrical signal, and output the combined electrical signal, wherein the combined electrical signal is used to generate an image of the target object; and
the optical-to-electrical conversion module is configured to: when the image sensor is in a non-image shooting mode, convert the optical signals obtained by the m optical filters into electrical signals, and output the electrical signals corresponding to the m optical filters, to generate a hyper spectral image of the target object or a multispectral image of the target object.

14. The image sensor according to claim 13, wherein the non-image shooting mode is any one of the following modes: an object recognition mode, a light source estimation mode, and a depth detection mode.

15. An electronic device, wherein the electronic device comprises at least one optical filter array and a processor, the optical filter array is a hyper spectral or multispectral optical filter array, and the optical filter array comprises m optical filters and an optical-to-electrical conversion unit;
the m optical filters are configured to obtain optical signals of a target object in at least two different spectral bands;
the optical-to-electrical conversion unit is configured to convert the optical signals obtained by the m optical filters into electrical signals;
the processor is configured to: when the electronic device is in an image shooting mode, combine the electrical signals corresponding to the m optical filters to obtain a combined electrical signal, and generate an image of the target object based on the combined electrical signal; and
the processor is configured to: when the electronic device is in a non-image shooting mode, generate a hyper spectral image or a multispectral image of the target object based on the electrical signals corresponding to the m optical filters.

16. The electronic device according to claim 15, wherein the non-image shooting mode is any one of the following modes: an object recognition mode, a light source estimation mode, and a depth detection mode.

17. An electronic device, wherein the electronic device comprises an image sensor and a processor, and the image sensor comprises at least one optical filter array;
the image sensor is the image sensor according to any one of claims 1 to 7; and
the processor is configured to generate an image of a target object based on an electrical signal output by each optical filter array.

18. The electronic device according to claim 17, wherein the electronic device is any one of the following devices: a camera, a mobile terminal, an intelligent vehicle, and a surveillance device.

19. A signal processing method, wherein the method is applied to an electronic device, the electronic device comprises at least one optical filter array, the optical filter array is a hyper spectral or multispectral optical filter array, the optical filter array comprises m optical filters, and the method comprises:
obtaining, by using the m optical filters, optical signals of a target object in at least two different spectral bands;
converting the optical signals obtained by the m optical filters into electrical signals; and
combining the electrical signals corresponding to the m optical filters to obtain a combined electrical signal, and generating an image of the target object based on the combined electrical signal.

20. The method according to claim 19, wherein the combining the electrical signals corresponding to the m optical filters comprises:
superposing the electrical signals corresponding to the m optical filters to obtain the combined electrical signal.

21. A signal processing method, wherein the method is applied to an electronic device, the electronic device comprises at least one optical filter array, the optical filter array is a hyper spectral or multispectral optical filter array, the optical filter array comprises m optical filters, and the method comprises:
obtaining, by using the m optical filters, optical signals of a target object in at least two different spectral bands;
converting the optical signals obtained by the m optical filters into electrical signals; and
when the electronic device is in an image shooting mode, combining the electrical signals corresponding to the m optical filters to obtain a combined electrical signal, and generating an image of the target object based on the combined electrical signal; and
when the electronic device is in a non-image shooting mode, generating a hyper spectral image or a multispectral image of the target object based on the electrical signals corresponding to the m optical filters.

22. The method according to claim 21, wherein the non-image shooting mode is any one of the following modes: an object recognition mode, a light source estimation mode, and a depth detection mode.

23. A computer program, wherein when the computer program is run on a computer, the computer is enabled to perform the method according to claim 19 or 20, or the method according to claim 21 or 22.
